(19) Europäisches Patentamt
European Patent Office
Office européen des brevets

(11) **EP 2 988 509 A1**

(12) **EUROPEAN PATENT APPLICATION**
published in accordance with Art. 153(4) EPC

(43) Date of publication:
**24.02.2016 Bulletin 2016/08**

(51) Int Cl.:
***H04N 19/597*** *(2014.01)*

(21) Application number: **14785455.8**

(86) International application number:
**PCT/KR2014/003372**

(22) Date of filing: **17.04.2014**

(87) International publication number:
**WO 2014/171769 (23.10.2014 Gazette 2014/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.04.2013 US 201361812935 P**

(71) Applicant: **Samsung Electronics Co., Ltd.
Gyeonggi-do 16677 (KR)**

(72) Inventors:
• **LEE, Jin-young**
**Hwaseong-si**
**Gyeonggi-do 445-828 (KR)**

• **CHOI, Byeong-doo**
**Suwon-si**
**Gyeonggi-do 443-725 (KR)**
• **PARK, Min-woo**
**Hwaseong-si**
**Gyeonggi-do 445-762 (KR)**
• **WEY, Ho-cheon**
**Seongnam-si**
**Gyeonggi-do 463-705 (KR)**
• **YOON, Jae-won**
**Seoul 138-891 (KR)**
• **CHO, Yong-jin**
**Seoul 133-771 (KR)**

(74) Representative: **Appleyard Lees
15 Clare Road
Halifax HX1 2HY (GB)**

(54) **MULTI-VIEW VIDEO ENCODING METHOD USING VIEW SYNTHESIS PREDICTION AND APPARATUS THEREFOR, AND MULTI-VIEW VIDEO DECODING METHOD AND APPARATUS THEREFOR**

(57) Provided is a multi-view video decoding method including: determining whether a prediction mode of a current block being decoded is a merge mode; when the prediction mode is determined to be the merge mode, forming a merge candidate list including, as a merge candidate, at least one of an inter-view candidate, a spatial candidate, a disparity candidate, a view synthesis prediction candidate, and a temporal candidate; and predicting the current block by selecting a merge candidate to be used in predicting the current block from the merge candidate list, wherein at least one adjacent block from among adjacent blocks forming the spatial candidate is determined as the spatial candidate or the view synthesis prediction candidate based on whether view synthesis prediction is performed on the at least one adjacent block.

FIG. 2A

**Description**

TECHNICAL FIELD

The present disclosure relates to a multi-view video encoding method and apparatus, and a multi-view video decoding method and apparatus, and more particularly, to a multi-view video encoding method and apparatus using view synthesis prediction, and a multi-view video decoding method and apparatus.

BACKGROUND ART

A stereoscopic image is a 3-dimensioanl (3D) image providing shape information about a depth and a space at the same time. In a stereo-image, different views are provided to left and right eyes, whereas in the stereoscopic image, an image is provided so that the image appears to be viewed from a different direction whenever the observer changes his or her viewpoint. Accordingly, in order to generate the stereoscopic image, images captured in different views are required.

The images captured in different views in order to generate the stereoscopic image have massive amounts of data. Accordingly, considering a network infrastructure, terrestrial bandwidth, etc. for the stereoscopic image, it is nearly impossible to compress the stereoscopic image even by using an encoding apparatus suitable for single-view video coding, such as MPEG-2, H.264/AVC, or HEVC.

However, since images captured from different viewpoints of the observer are related to each other, much information about the images overlap. Thus, a smaller amount of data may be transmitted by using an encoding apparatus suitable for a multi-view image that provides viewpoint redundancy.

Accordingly, a multi-view image encoding apparatus suitable for generating a stereoscopic image is required. Specifically, a technology for efficiently reducing time and viewpoint redundancy needs to be developed.

DETAILED DESCRIPTION OF THE INVENTION

TECHNICAL PROBLEM

Provided are a multi-view video encoding method and apparatus using view synthesis prediction, and a multi-view video decoding method and apparatus.

TECHNICAL SOLUTION

According to an aspect of an exemplary embodiment, a multi-view video decoding method includes: determining whether a prediction mode of a current block being decoded is a merge mode; when the prediction mode is determined to be the merge mode, forming a merge candidate list including, as a merge candidate, at least one of an inter-view candidate, a spatial candidate, a disparity candidate, a view synthesis prediction candidate, and a temporal candidate; and predicting the current block by selecting a merge candidate to be used in predicting the current block from the merge candidate list, wherein whether to include in the merge candidate list a view synthesis prediction candidate for at least one of an adjacent block of the current block and the current block is determined based on whether view synthesis prediction is performed on the adjacent block and the current block.

ADVANTAGEOUS EFFECTS

According to an embodiment of the present disclosure, a plurality of view synthesis prediction (VSP) candidates may be included in a merge candidate list. Accordingly, encoding efficiency may be increased via view synthesis prediction using viewpoint correlation.

DESCRIPTION OF THE DRAWINGS

FIG. 1A is a block diagram of a multi-view video encoding apparatus 10 according to various embodiments.
FIG. 1B is a flowchart of a multi-view video encoding method according to various embodiments.
FIG. 2A is a block diagram of a multi-view video decoding apparatus 20 according to various embodiments.
FIG. 2B is a flowchart of a multi-view video decoding method according to various embodiments.
FIG. 3A illustrates a spatial prediction candidate used in an inter prediction mode, according to an embodiment.

FIG. 3B illustrates a temporal prediction candidate used in an inter prediction mode, according to an embodiment.

FIG. 4A illustrates an inter-view prediction candidate used in an inter-view prediction mode, according to an embodiment.

FIG. 4B is a diagram for describing encoding using image synthesis prediction, according to an embodiment.

FIG. 4C is a diagram for describing an encoding process using a synthesis image of a virtual view, according to an embodiment.

FIG. 4D is a diagram for describing a decoding process using a synthesis image of a virtual view, according to an embodiment.

FIG. 4E is a diagram for describing an encoding method using a view synthesis prediction encoding tool, according to an embodiment.

FIG. 5A is diagrams for describing a process in which a multi-view video decoding apparatus adds a view synthesis prediction candidate to a merge candidate list, according to an embodiment of the present disclosure.

FIG. 5B is a diagram for describing a process of adding a view synthesis prediction candidate to a merge candidate list on the basis of priority between candidates according to an embodiment of the present disclosure.

FIG. 5C is a diagram for describing a process of adding a view synthesis prediction candidate to a merge candidate list on the basis of priority between candidates according to another embodiment of the present disclosure.

FIG. 5D is a diagram for describing a process of adding a view synthesis prediction candidate to a merge candidate list on the basis of priority between candidates according to another embodiment of the present disclosure.

FIG. 5E is a diagram for describing a process of adding a view synthesis prediction candidate to a merge candidate list on the basis of priority between candidates according to another embodiment of the present disclosure.

FIG. 5F is a diagram for describing a process of adding a view synthesis prediction candidate to a merge candidate list on the basis of priority between candidates according to another embodiment of the present disclosure.

FIG. 5G is a diagram for describing a process of adding a view synthesis prediction candidate to a merge candidate list on the basis of priority between candidates according to another embodiment of the present disclosure.

FIG. 5H is a diagram for describing a process of adding a view synthesis prediction candidate to a merge candidate list on the basis of priority between candidates according to another embodiment of the present disclosure.

FIG. 5I is a diagram for describing a process of adding a view synthesis prediction candidate to a merge candidate list on the basis of priority between candidates according to another embodiment of the present disclosure.

FIG. 5J is a diagram for describing a process of adding a view synthesis prediction candidate to a merge candidate list on the basis of priority between candidates according to another embodiment of the present disclosure.

FIG. 5K is a diagram for describing a process of adding a view synthesis prediction candidate to a merge candidate list on the basis of priority between candidates according to another embodiment of the present disclosure.

FIG. 6A illustrates a pseudo code for describing a process of adding a view synthesis prediction candidate to a merge candidate list, according to an embodiment of the present disclosure.

FIG. 6B illustrates a pseudo code for describing a process of adding a view synthesis prediction candidate to a merge candidate list, according to an embodiment of the present disclosure.

FIG. 7 is a block diagram of a video encoding apparatus based on coding units according to a tree structure, according to an embodiment.

FIG. 8 is a block diagram of a video decoding apparatus based on coding units according to a tree structure, according to an embodiment.

FIG. 9 is a diagram for describing a concept of coding units according to an embodiment of the present disclosure.

FIG. 10 is a block diagram of an image encoder based on coding units, according to an embodiment of the present disclosure.

FIG. 11 is a block diagram of an image decoder based on coding units, according to an embodiment of the present disclosure.

FIG. 12 is a diagram illustrating deeper coding units according to depths, and partitions, according to an embodiment of the present disclosure.

FIG. 13 is a diagram for describing a relationship between a coding unit and transformation units, according to an embodiment of the present disclosure.

FIG. 14 is a diagram for describing encoding information of coding units corresponding to a depth, according to an embodiment of the present disclosure.

FIG. 15 is a diagram of deeper coding units according to depths, according to an embodiment of the present disclosure.

FIGS. 16 through 18 are diagrams for describing a relationship between coding units, prediction units, and transformation units, according to an embodiment of the present disclosure.

FIG. 19 is a diagram for describing a relationship between a coding unit, a prediction unit, and a transformation unit, according to encoding mode information of Table 1.

FIG. 20 is a diagram of a physical structure of a disc in which a program is stored, according to an embodiment.

FIG. 21 is a diagram of a disc drive for recording and reading a program by using a disc.

FIG. 22 is a diagram of an overall structure of a content supply system for providing a content distribution service.

FIGS. 23 and 24 are diagrams respectively of an external structure and an internal structure of a mobile phone to which a video encoding method and a video decoding method of the present disclosure are applied, according to an embodiment.

FIG. 25 is a diagram of a digital broadcast system to which a communication system according to the present disclosure is applied.

FIG. 26 is a diagram illustrating a network structure of a cloud computing system using a video encoding apparatus and a video decoding apparatus, according to an embodiment of the present disclosure.

BEST MODE

According to an aspect of an exemplary embodiment, a multi-view video decoding method includes: determining whether a prediction mode of a current block being decoded is a merge mode; when the prediction mode is determined to be the merge mode, forming a merge candidate list including, as a merge candidate, at least one of an inter-view candidate, a spatial candidate, a disparity candidate, a view synthesis prediction candidate, and a temporal candidate; and predicting the current block by selecting a merge candidate to be used in predicting the current block from the merge candidate list, wherein whether to include in the merge candidate list a view synthesis prediction candidate for at least one of an adjacent block of the current block and the current block is determined based on whether view synthesis prediction is performed on the adjacent block and the current block.

The view synthesis prediction candidate for the current block may have a fixed priority in the merge candidate list.

The view synthesis prediction candidate for the adjacent block may be included in the merge candidate list when it is determined that the view synthesis prediction is performed on the adjacent block, and the view synthesis prediction candidate for the current block may be included in the merge candidate list when it is determined that the view synthesis prediction is performed on the current block.

The view synthesis prediction candidate for the adjacent block may be included in the merge candidate list when it is determined that the view synthesis prediction is performed on the adjacent block and there is no view synthesis prediction candidate in the merge candidate list, and the view synthesis prediction candidate for the current block may be included in the merge candidate list when it is determined that the view synthesis prediction is performed on the current block and there is no view synthesis prediction candidate in the merge candidate list.

The adjacent block may include at least a left block of the current block and an upper block of the current block.

The adjacent block may only include a left block of the current block.

The forming of the merge candidate list may include: generating a plurality of groups including the inter-view candidate, the spatial candidate, the disparity candidate, the temporal candidate, and the view synthesis prediction candidate; adding at least one candidate included in the plurality of groups to merge candidate groups for each of the plurality of groups; and adding at least one candidate included in the merge candidates to the merge candidate list based on a priority between the plurality of groups or a priority between candidates in each of the plurality of groups, wherein the view synthesis prediction candidate for the current block may be included in some or all of the plurality of groups.

According to an aspect of another exemplary embodiment, a multi-view video encoding method includes: determining whether a prediction mode of a current block being encoded is a merge mode; when the prediction mode is determined to be the merge mode, forming a merge candidate list comprising, as a merge candidate, at least one of an inter-view candidate, a spatial candidate, a disparity candidate, a view synthesis prediction candidate, and a temporal candidate; and predicting the current block by selecting a merge candidate to be used in predicting the current block from the merge candidate list, wherein whether to include in the merge candidate list a view synthesis prediction candidate for at least one of an adjacent block of the current block and the current block is determined based on whether view synthesis prediction is performed on the adjacent block and the current block.

The view synthesis prediction candidate for the current block may have a fixed priority in the merge candidate list.

The view synthesis prediction candidate for the adjacent block may be included in the merge candidate list when it is determined that the view synthesis prediction is performed on the adjacent block, and the view synthesis prediction candidate for the current block may be included in the merge candidate list when it is determined that the view synthesis prediction is performed on the current block.

The adjacent block may only include a left block of the current block.

The forming of the merge candidate list may include: generating a plurality of groups including the inter-view candidate, the spatial candidate, the disparity candidate, the temporal candidate, and the view synthesis prediction candidate; adding at least one candidate included in the plurality of groups to merge candidate groups for each of the plurality of groups; and adding at least one candidate included in the merge candidates to the merge candidate list based on a priority between the plurality of groups or a priority between candidates in each of the plurality of groups, wherein the view synthesis prediction candidate for the current block may be included in some or all of the plurality of groups.

According to an aspect of another exemplary embodiment, a multi-view video decoding apparatus includes: a mode determiner configured to determine whether a prediction mode of a current block being decoded is a merge mode; a merge candidate list former configured to, when the prediction mode is determined to be the merge mode, form a merge candidate list including, as a merge candidate, at least one of an inter-view candidate, a spatial candidate, a disparity candidate, a view synthesis prediction candidate, and a temporal candidate; and a predictor configured to predict the current block by selecting a merge candidate to be used in predicting the current block from the merge candidate list, wherein whether to include in the merge candidate list a view synthesis prediction candidate for at least one of an adjacent block of the current block and the current block is determined based on whether view synthesis prediction is performed on the adjacent block and the current block.

According to an aspect of another exemplary embodiment, a multi-view video encoding apparatus includes: a mode determiner configured to determine whether a prediction mode of a current block being encoded is a merge mode; a merge candidate list former configured to, when the mode determiner determines that the prediction mode is the merge mode, form a merge candidate list including, as a merge candidate, at least one of an inter-view candidate, a spatial candidate, a disparity candidate, a view synthesis prediction candidate, and a temporal candidate; and a predictor configured to predict the current block by selecting a merge candidate to be used in predicting the current block from the merge candidate list, wherein whether to include in the merge candidate list a view synthesis prediction candidate for at least one of an adjacent block of the current block and the current block is determined based on whether view synthesis prediction is performed on the adjacent block and the current block.

According to an aspect of another exemplary embodiment, a computer-readable recording medium has recorded thereon a program for performing the multi-view video decoding method.

MODE OF THE INVENTION

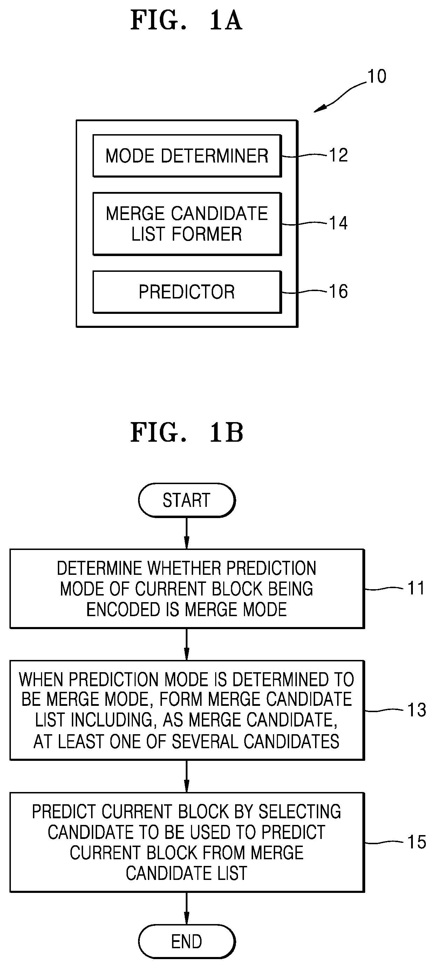

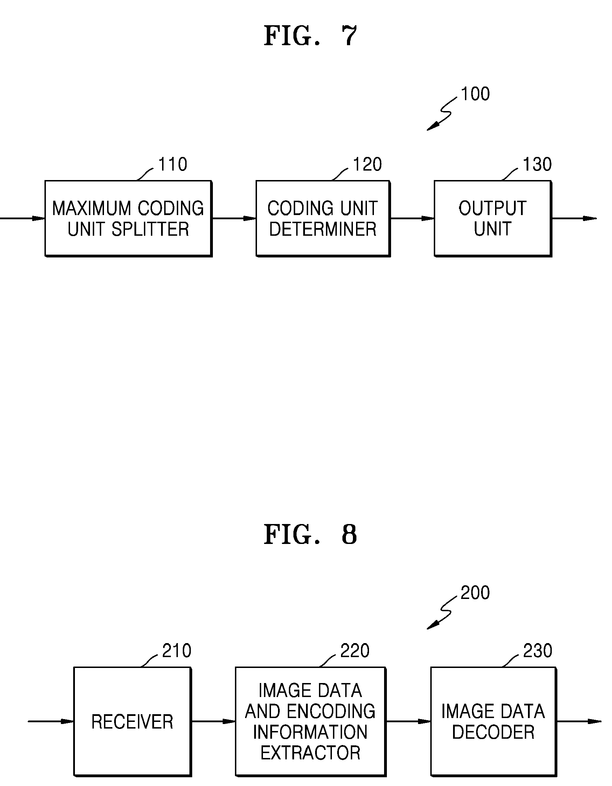

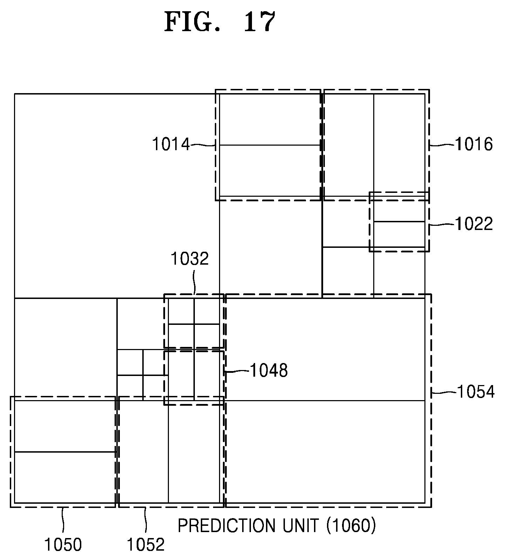

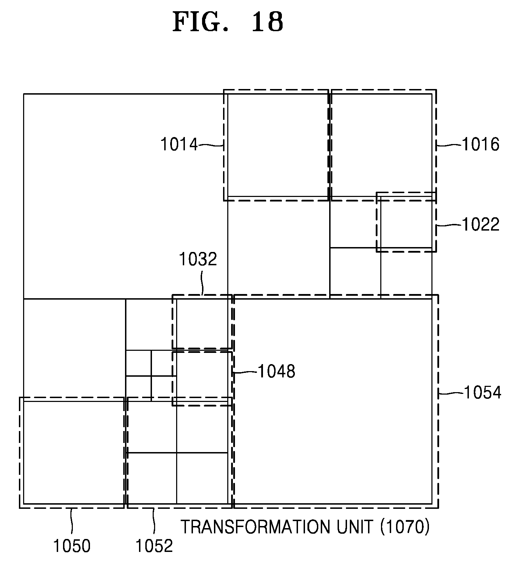

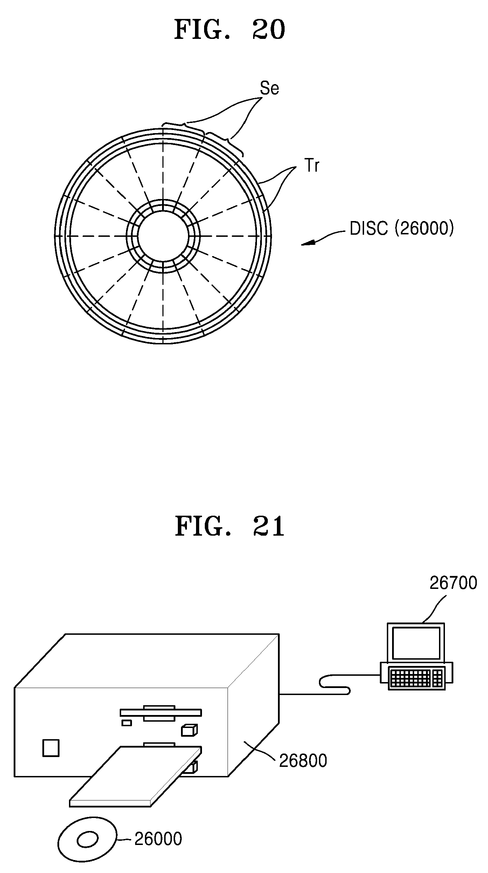

Hereinafter, a multi-view video encoding technique and a multi-view video decoding technique using view synthesis prediction according to various embodiments will be described with reference to FIGS. 1A through 6B. Also, a video encoding technique and video decoding technique based on coding units having a tree structure according to various embodiments that are applicable to the multi-view video encoding technique and the multi-view video decoding technique will be described with reference to FIGS. 7 through 19. Also, various embodiments to which the video encoding method and the video decoding method are applicable will be described with reference to FIGS. 20 through 26.

Hereinafter, an 'image' may denote a still image or a moving image of a video, or a video itself.

Hereinafter, a 'sample' is data allocated to a sampling location of an image and may indicate data that is a processing target. For example, pixels in an image of a spatial area may be samples.

Prediction is used to reduce information overlapped in an image. Prediction in video compression means that a prediction signal similar to an original signal is provided. Prediction may be largely classified into, based on methods, prediction via spatial reconstructed image reference, prediction via temporal reconstructed image reference, and prediction of other symbols.

Here, intra prediction is a prediction technology allowing only spatial reference, wherein a current block is predicted by referring to samples that are already reconstructed around a block to be currently encoded. Intra prediction is a technology of generating a prediction value for a block to be encoded from encoded adjacent pixels in a current picture. Such intra prediction is based on a fact that adjacent pixels in a picture have high correlation.

Similarly, pictures forming a video also have high temporal correlation. Accordingly, a prediction value for a coding block in a picture to be currently encoded may be generated from a pre-encoded picture. A technology of generating a prediction block from a pre-encoded picture is referred to as inter prediction.

In inter prediction, a prediction block is generated from pre-encoded pictures, but due to restriction in a memory, it is not possible to store and refer to all reconstructed pictures. Thus, in video codec, some of reconstructed pictures having high correlation with a picture to be encoded is stored, and the part of the reconstructed picture is used in inter prediction. In video codec, a space where a reconstructed picture is stored is referred to as a decoded picture buffer (DPB), and a reconstructed picture used in inter prediction, from among pictures stored in the DPB, is referred to as a reference picture. An encoder (encoding apparatus) searches reference pictures for a prediction block that is most similar to a block to be currently encoded during an inter prediction process, and then transmits information about the prediction block to a decoder (decoding apparatus). At this time, a process of searching reference pictures for an appropriate prediction block is referred to motion estimation. For precise motion estimation, a reconstructed picture may be interpolated, and then motion estimation may be performed on an interpolated image in a sub-pixel unit, according to a type of video codec. In motion compensation, a prediction block is generated based on motion information (motion vector or reference picture index) for an appropriate prediction block found in a motion estimation process. In summary, a video encoder (encoding apparatus) searches reference pictures for an appropriate prediction block via a motion estimation process, and generates a prediction block via a motion compensation process. The video encoder (encoding apparatus) performs transformation, quantization, and entropy encoding on a differential signal that is a difference value between a prediction block generated via inter prediction and an original block.

When a current coding block is encoded in an inter prediction mode, a decoder (decoding apparatus) may generate a prediction block only via a motion compensation process without having to perform a motion estimation process on the prediction block since reference picture information and reference block information, which are transmitted from an encoder, are used. The decoder (decoding apparatus) may reconstruct an image by adding the generated prediction block and a residual signal generated via entropy decoding, inverse quantizing, and inverse transforming processes, apply an in-loop filter according to a type of codec, and re-store a finally reconstructed picture, such that the finally reconstructed picture is used as a reference picture later.

In inter prediction, when there is a plurality of reference picture lists as a result of motion estimation, information about which reference picture list is used, an index for classifying reference pictures in a reference picture list, and information about a motion vector need to be transmitted to a decoder (decoding apparatus). In order to reduce an amount of motion information transmitted in a prediction unit (PU) in an inter prediction mode, modes including a merge mode using correlation of motion information between an adjacent block and a current block, and an advanced motion vector prediction (AMVP) mode are used. The above-described two methods effectively reduce an amount of motion-related data by forming a list of adjacent blocks for inducing motion information, and transmitting adjacent block selection information in the list to a decoder (decoding apparatus). Accordingly, an encoder (encoding apparatus) and the decoder (decoding apparatus) need to obtain an adjacent block candidate list via the same process. A merge skip mode is a special merge mode, wherein transformation coefficients for entropy encoding are all close to 0 after quantization is performed, and only adjacent block selection information is transmitted without having to transmit a residual signal. Accordingly, a relatively high encoding efficiency may be obtained in an image having less movement, a still image, and a screen content image.

A merge mode is a technology of inducing a reference direction, a reference picture index, and a motion vector predictor (MVP) from an adjacent block. A motion vector value is calculated by the MVP induced via merge. Since a plurality of pieces of motion information are not transmitted to a decoder (decoding apparatus), a high encoding efficiency may be obtained in a block having high correlation with an adjacent block. An encoder (encoding apparatus) forms a merge candidate by searching adjacent blocks that performed motion prediction, and signals merge block information selected as a result of motion search to the decoder (decoding apparatus), as a merge index. The encoder (encoding apparatus) and the decoder (decoding apparatus) according to embodiments of the present disclosure may include following candidates as candidates of a merge mode. However, the candidates of the merge mode are not limited thereto, and various types of candidates may be added according to a method of performing prediction.

    (1) Inter-view candidate
    (2) Spatial candidate
    (3) Disparity candidate
    (4) Temporal candidate
    (5) View synthesis prediction (VSP) candidate

Here, a spatial candidate and a temporal candidate may perform prediction in a same view or between a current view and another view different from the current view in a multi-view video, whereas an inter-view candidate, a disparity candidate, and a VSP candidate may perform prediction between a current view and another view different from the current view in a multi-view video.

FIG. 1A is a block diagram of a multi-view video encoding apparatus 10 according to various embodiments. FIG. 1B is a flowchart of a multi-view video encoding method according to various embodiments.

The multi-view video encoding apparatus 10 according to various embodiments includes a mode determiner 12, a merge candidate list former 14, and a predictor 16.

The mode determiner 12 determines whether a prediction mode of a current block being encoded is a merge mode. In detail, the mode determiner 12 may determine a rate-distortion cost by applying prediction modes, such as a merge mode, an AMVP mode, and a merge skip mode, to encode the current block, and determine an appropriate prediction mode based on the determined rate-distortion cost.

When the mode determines 12 determines that the prediction mode is the merge mode, the merge candidate former 14 forms a merge candidate list including, as a merge candidate, at least one of an inter-view candidate, a spatial candidate, a disparity candidate, a VSP candidate, and a temporal candidate. An embodiment is not limited thereto, and the merge candidate list may be obtained by adding various types of merge candidates. Here, the merge candidate list former 14 may determine the VSP candidate to have a fixed priority. Also, the merge candidate list former 14 may determine, a plurality of times, whether to add the VSP candidate to the merge candidate list. When a maximum coding unit included in an image being currently encoded is split into at least one coding unit and one coding unit is split into at least one prediction unit for prediction encoding, the current block is the prediction unit.

The predictor 16 predicts the current block by selecting a merge candidate to be used to predict the current block from the merge candidate list. In detail, a rate-distortion cost is determined by encoding the current block by using various candidates, and an appropriate merge candidate is determined based on the determined rate-distortion cost.

Hereinafter, operations of the multi-view video encoding apparatus 10 are described with reference to FIG. 1B.

FIG. 1B is a flowchart of a multi-view video encoding method according to various embodiments.

In operation 11, the mode determiner 12 determines whether a prediction mode of a current block being encoded is a merge mode.

In operation 13, when the prediction mode is determined to be the merge mode, the merge candidate list former 14 forms a merge candidate list including, as a merge candidate, at least one of an inter-view candidate, a spatial candidate, a disparity candidate, a VSP candidate, and a temporal candidate.

In operation 15, the predictor 16 predicts the current block by selecting a merge candidate to be used to predict the current block from the merge candidate list.

Also, in operation 13, the merge candidate list former 14 may determine, a plurality of times, whether to add the VSP candidate to the merge candidate list. Also, the VSP candidate may be determined to have a fixed priority.

The multi-view video encoding apparatus 10 according to various embodiments may include a central processor (not shown) that generally controls the mode determiner 12, the merge candidate list former 14, and the predictor 16. Alternatively, the mode determiner 12, the merge candidate list former 14, and the predictor 16 may operate by their respective processors (not shown), and the multi-view video encoding apparatus 10 may generally operate according to interactions of the processors (not shown). Alternatively, the mode determiner 12, the merge candidate list former 14, and the predictor 16 may be controlled according to control of an external processor (not shown) of the multi-view video encoding apparatus 10.

The multi-view video encoding apparatus 10 may include at least one data storage unit (not shown) in which input and output data of the mode determiner 12, the merge candidate list former 14, and the predictor 16 is stored. The multi-view video encoding apparatus 10 may include a memory controller (not shown) that controls data input and output of the data storage unit (not shown).

The multi-view video encoding apparatus 10 may operate in connection with an internal video encoding processor or an external video encoding processor so as to output video encoding results, thereby performing a video encoding operation including transformation. The internal video encoding processor of the multi-view video encoding apparatus 10 may realize a video encoding operation as a separate processor. Also, a basic video encoding operation may be realized as the multi-view video encoding apparatus 10, a central processing apparatus, or a graphic processing apparatus includes a video encoding processing module.

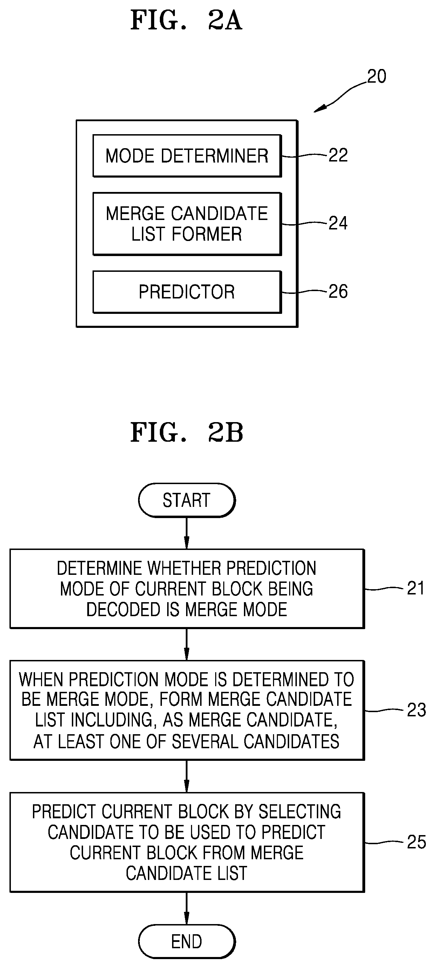

FIG. 2A is a block diagram of a multi-view video decoding apparatus according to various embodiments.

A multi-view video decoding apparatus 20 according to various embodiments includes a mode determiner 22, a merge candidate list former 24, and a predictor 26.

The mode determiner 22 determines whether a prediction mode of a current block being decoded is a merge mode.

When the mode determiner 22 determines that the prediction mode is the merge mode, the merge candidate list former 24 forms a merge candidate list including, as a merge candidate, at least one of an inter-view candidate, a spatial candidate, a disparity candidate, a VSP candidate, and a temporal candidate. At this time, the merge candidate list former may determine, a plurality of times, whether to add the VSP candidate to the merge candidate list.

The predictor 26 predicts the current block by selecting a merge candidate to be used to predict the current block from the merge candidate list.

Hereinafter, operations of the multi-view video decoding apparatus 20 will be described with reference to FIG. 2B.

FIG. 2B is a flowchart of a multi-view video decoding method according to various embodiments.

In operation 21, the mode determiner 22 may determine whether a prediction mode of a current block being decoded is a merge mode.

In operation 23, when the prediction mode is determined to be the merge mode, the merge candidate list former 24 forms a merge candidate list including, as a merge candidate, at least one of an inter-view candidate, a spatial candidate, a disparity candidate, a VSP candidate, and a temporal candidate. Here, determining whether to add the VSP candidate to the merge candidate list may be performed a plurality of times.

In operation 25, the predictor 26 may predict the current block by selecting a merge candidate to be used to predict the current block from the merge candidate list.

The multi-view video decoding apparatus 20 according to various embodiments may include a central processor (not shown) that generally controls the mode determiner 22, the merge candidate list former 24, and the predictor 26. Alternatively, the mode determiner 22, the merge candidate list former 24, and the predictor 26 may operate by their respective processors (not shown), and the multi-view video decoding apparatus 20 may generally operate according to interactions of the processors (not shown). Alternatively, the mode determiner 22, the merge candidate list former 24, and the predictor 26 may be controlled according to control of an external processor (not shown) of the multi-view video decoding apparatus 20.

The multi-view video decoding apparatus 20 may include at least one data storage unit (not shown) in which input and output data of the mode determiner 22, the merge candidate list former 24, and the predictor 26 is stored. The multi-view video decoding apparatus 20 may include a memory controller (not shown) that controls data input and output of the data storage unit (not shown).

The multi-view video decoding apparatus 20 according to various embodiments may operate in connection with an internal video decoding processor or an external video decoding processor so as to reconstruct a video via video decoding, thereby performing a video decoding operation including inverse transformation. The internal video decoding processor of the multi-view video decoding apparatus 20 according to various embodiments may be a separate processor, or a basic video decoding operation may be realized as the multi-view video decoding apparatus 20, a central processing apparatus, or a graphic processing apparatus includes a video decoding processing module).

Hereinafter, (1) an inter-view candidate, (2) a spatial candidate, (3) a disparity candidate, (4) a temporal candidate, and (5) a VSP candidate, which may be added to a merge candidate list as merge candidates will each be described.

Here, (2) the spatial candidate and (4) the temporal candidate, which may be used for prediction in a same view and another view different from a view of a block being currently predicted, will be described first, and (1) the inter-view candidate, (3) the disparity candidate, and (5) the VSP candidate, which may be used for prediction referring to another view different from a view of a block being currently predicted, will be described.

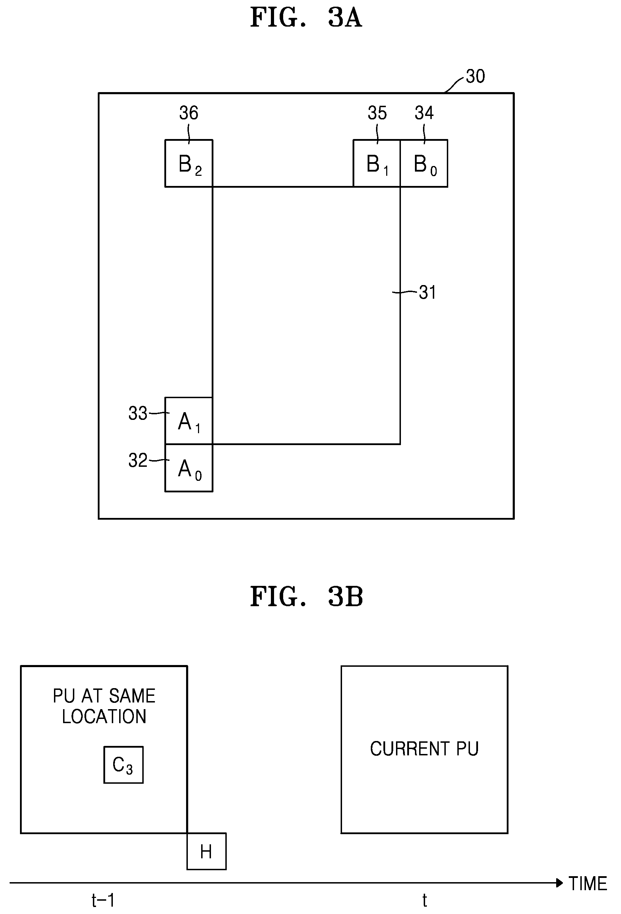

First, (2) the spatial candidate will be described. FIG. 3A illustrates a spatial prediction candidate used in an inter prediction mode, according to an embodiment.

Adjacent blocks near a current block are added to merge candidates under an assumption that motions of the current block and the adjacent blocks are similar. A 2Nx2N prediction unit (PU) 31 uses five adjacent blocks as spatial merge candidates, and sequentially finds and uses $A_1$ 33, $B_1$ 35, $B_0$ 34, $A_0$ 32, and $B_2$ 36. A spatial candidate is unable to be used if an adjacent block is a frame boundary or is encoded in an intra prediction mode and thus does not include motion information.

Next, (4) the temporal candidate will now be described. FIG. 3B illustrates a temporal prediction candidate used in an inter prediction mode, according to an embodiment.

When a temporal candidate is used, a direction and a reference picture index of a reference picture for a temporal merge candidate are transmitted to a decoder (decoding apparatus) through a slice header. FIG. 3B illustrates a selection location of a temporal merge candidate of a current PU. A PU at the same location is a PU at a location corresponding to a location of the current PU, in a selected reference picture. A lower right block H of a reference PU may be first used as a temporal merge candidate due to prediction performance, and if motion information of a lower right PU does not exist, a block $C_3$ at the center of the reference PU may be used as the temporal merge candidate. A temporal merge candidate block is not used if the temporal merge candidate block is located outside a coding tree block (CTB), and motion information of the temporal merge candidate block may not exist in case of an image boundary or intra prediction.

Next, (1) the inter-view candidate and (3) the disparity candidate will now be described.

A compression performance of multi-vide video encoding may be derived by removing spatial redundancy using an inter-view prediction method. Images of one object captured in different views have high similarity when a region hidden or exposed by moving a camera is excluded. A method of finding and encoding a region most similar to a block being currently encoded from an image of a different view by using such viewpoint similarity is referred to as disparity compensated prediction. Also, a motion vector used for disparity compensated prediction is referred to as a disparity vector to be classified from a general temporal motion vector.

Since the disparity compensated prediction method described above complies with a general encoding method of a coding tree unit (CTU), which is performed while encoding a single-view image, while referring to an image of another view, the disparity compensated prediction method may be performed without having to use an additional encoding algorithm other than reference image buffer management. However, when an encoding parameter of a neighboring view, which is pre-decoded during expanded view encoding, is predicted with respect to a multi-view image having high viewpoint correlation, further efficient encoding is possible. Accordingly, a viewpoint encoding parameter prediction method is used. An example of the viewpoint encoding parameter prediction method includes an inter-view motion vector prediction method. Since a multi-view image is obtained by capturing one subject in different views, the multi-view image has very similar motion characteristics excluding a region hidden or exposed according to view movement. An encoding efficiency may be increased by predicting a motion vector of a neighboring view, which is pre-encoded and pre-decoded, during expanded view encoding by using such characteristics.

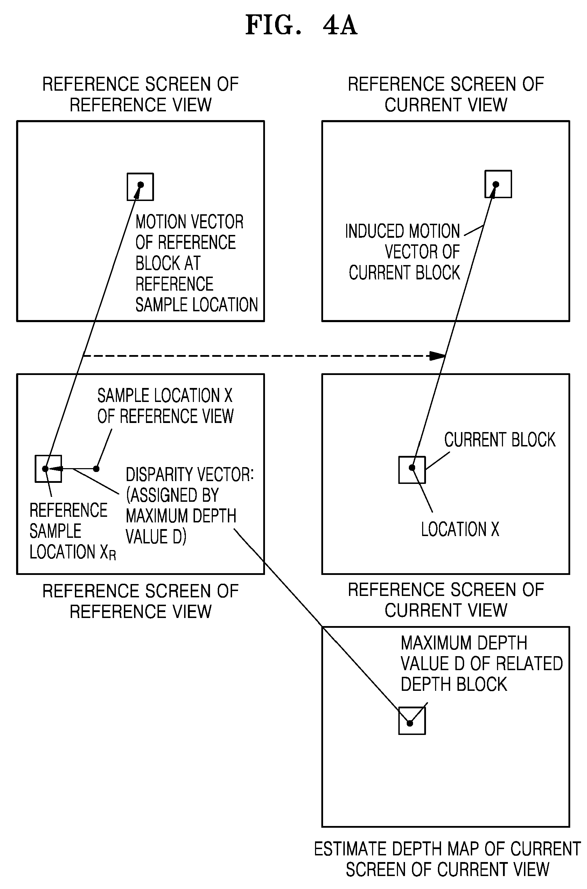

FIG. 4A illustrates an inter-view prediction candidate and a disparity candidate, according to an embodiment of the present disclosure.

In FIG. 4A, motion information of a current view is used together with motion information of a reference view, which is pre-encoded. A current screen of the current view is a screen to be currently encoded, and motion information of a current block shares motion prediction information of a reference view, which is pre-encoded.. Accordingly, a disparity vector at a location x of the current block is obtained first. A disparity vector may be obtained by estimating a depth map of a current screen of a current view and using a maximum depth value d of a depth block related to a location of a current block. When the disparity vector at the location x of the current block is obtained, a reference sample location $x_R$ of a reference view may be obtained. A block of a reference screen including the reference sample location $x_R$ is a corresponding block of the current block of the current screen. When the corresponding block is encoded via inter prediction, the corresponding block has a motion vector. The motion vector of the corresponding block is used as a prediction value of a motion vector of the current block. Accordingly, information about the motion vector of the corresponding block may be used as an inter-view candidate.

A disparity candidate is related to using a disparity vector as a motion vector to predict a current block. When the reference screen where the corresponding block is located in FIG. 4A is included in a reference picture list, the disparity vector may be used as a motion vector to predict the current block, and at this time, information about the disparity vector may be used as the disparity candidate.

In order to predict an inter-view motion vector, a motion vector at a location in a neighboring view, the location corresponds to a block to be currently encoded, needs to be predicted. At this time, the inter-view motion vector may be further accurately predicted by predicting the inter-view motion vector at a location away from a current coordinate in a reference view image by a disparity, and a disparity for predicting a motion vector from a neighboring view may be induced from an adjacent encoded block. The predicted inter-view motion vector is assigned and encoded as a first candidate from among candidates for merge and AMVP. Also, when a block to be encoded is encoded in an inter-view motion vector, disparity information used at this time may be stored to provide disparity information to another block to be encoded later.

Next, (5) the VSP candidate will now be described.

Since a multi-view video has very high viewpoint correlation, when a dependent view image is encoded, the dependent view image to be encoded may be obtained by composing a reference view color image and a reference view depth image. When the dependent view image obtained as such is a view synthesis (VS) frame, the VS frame may be used as an additional reference image to increase an encoding efficiency.

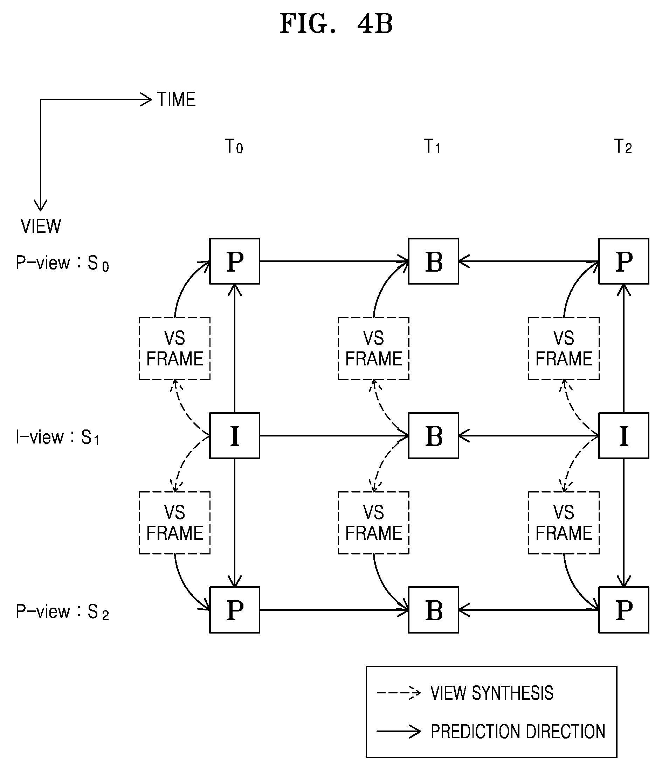

FIG. 4B is a diagram for describing encoding using image synthesis prediction, according to an embodiment. Since I-view is a reference view that does not refer to another view, VSP is not used, but since P-view may use data of I-view, VSP may be used. A VSP method may be applied not only to color video encoding, but also to depth data encoding.

A VS frame generated by using image synthesis matches a view to be encoded. Thus, if image synthesis is ideally performed, the VS frame completely matches a screen of a current view to be encoded. Since the VS frame is an image generated by using an image of an adjacent view, a decoder may generate the same VS frame. Accordingly, since an image same as a screen of a current view may be predicted and generated, an encoding efficiency may be increased by using viewpoint correlation. A detailed encoding method may use a method of generating and adding a VS frame to a reference list, and referring to a co-located block of the VS frame, which is at the same location as a block of a current view to be encoded, without having to use motion information, during an encoding process.

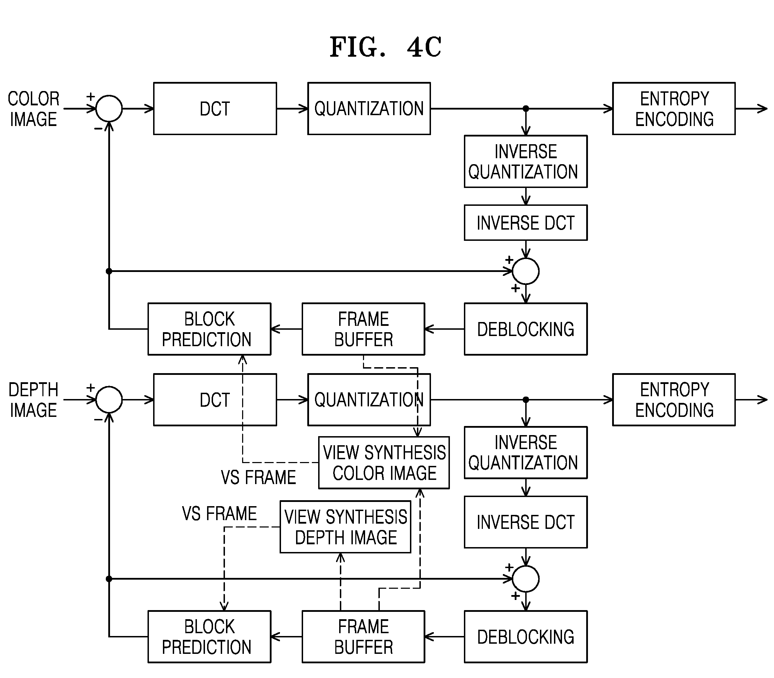

FIG. 4C is a diagram for describing an encoding process using a synthesis image of a virtual view, according to an embodiment.

A color image and a depth image forming a multi-view video may be separately encoded and decoded. Referring to FIG. 4C, an encoding process includes processes of obtaining a residual signal between an original image and a prediction image derived via block-based prediction, and then transforming and quantizing the residual signal. Then, a deblocking filter is used to accurately predict next images.

Since a number of bits required for encoding is low when an amount of a residual signal is low, it is important how similar a prediction image and an original image are. According to an embodiment, for block prediction, an intra prediction, inter prediction, or inter-view prediction-based merge mode, a merge skip mode, or an AMVP mode may be used.

Referring to FIG. 4C, an additional structure for synthesis in a virtual view may be required in order to generate a synthesis image of a virtual view. Referring to FIG. 4C, in order to generate a synthesis image of a color image of a current view, the multi-view video encoding apparatus 10 may generate a synthesis image of a color image of a current view by using a color image and a depth image of a pre-encoded adjacent view. Also, in order to generate a synthesis image of a depth image of a current view, the multi-view video encoding apparatus 10 may generate a synthesis image of a depth image of a current view by using a depth image of a pre-encoded adjacent view.

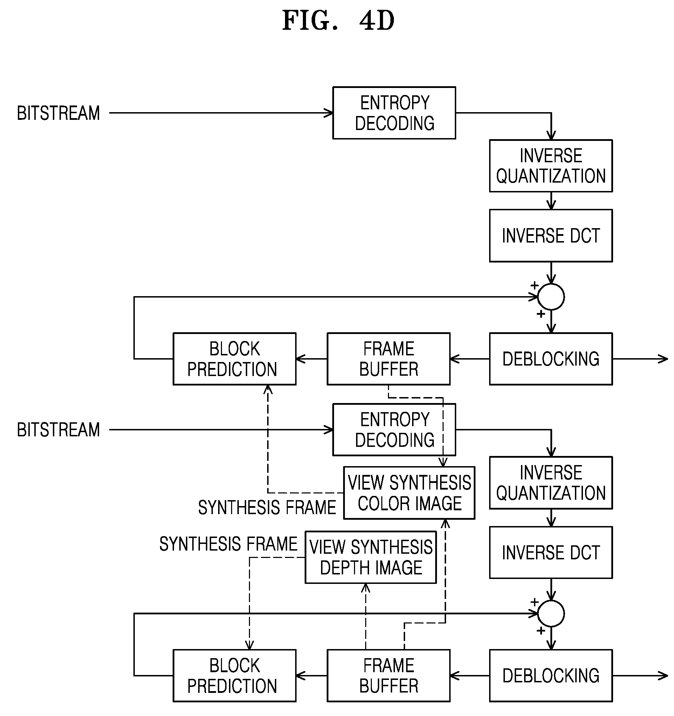

FIG. 4D is a diagram for describing a decoding process using a synthesis image of a virtual view, according to an embodiment.

Since the multi-view video decoding apparatus 20 of FIG. 4D substantially performs same operations as the multi-view video encoding apparatus 10 of FIG. 4C, details thereof are not provided again.

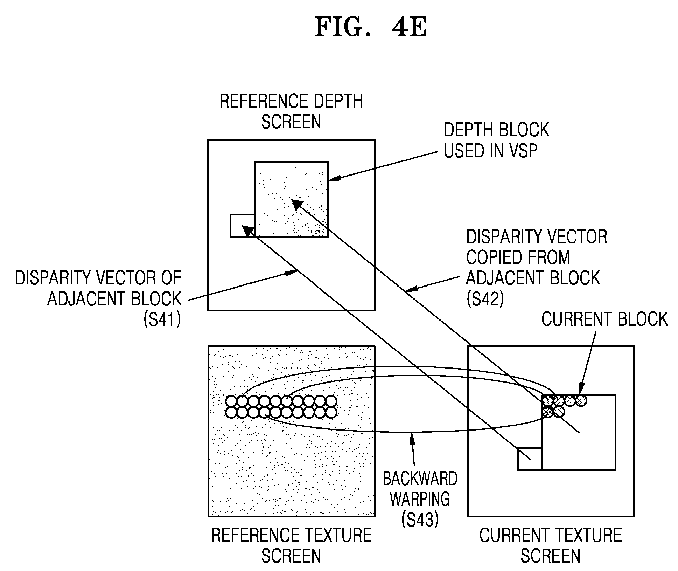

FIG. 4E is a diagram for describing an encoding method using a view synthesis prediction encoding tool, according to an embodiment.

In operation S41, since the multi-view video decoding apparatus 20 does not have information about a disparity vector of a current block, the multi-view video decoding apparatus 20 induces disparity vectors of adjacent blocks of the current block.

In operation S42, the multi-view video decoding apparatus 20 predicts information about the disparity vector of the current block by using information about the disparity vectors of the adjacent blocks of the current block. Thus, depth block information of a reference view corresponding to the display vector is used as a prediction value of depth information of the current block. A disparity vector of the reference view is induced by using the predicted depth block.

In operation S43, the multi-view video decoding apparatus 20 performs backward warping on a block included in the current block using the induced disparity vector to determine a reference block included in color images of adjacent views. The multi-view video decoding apparatus 20 generates the prediction value of the current block using the reference block and performs prediction encoding by using the generated prediction value.

Meanwhile, although an example performed by the multi-view video decoding apparatus 20 is described above, it will be understood by one of ordinary skill in the art that the method described with reference to FIG. 4E may also be performed by the multi-view video encoding apparatus 10.

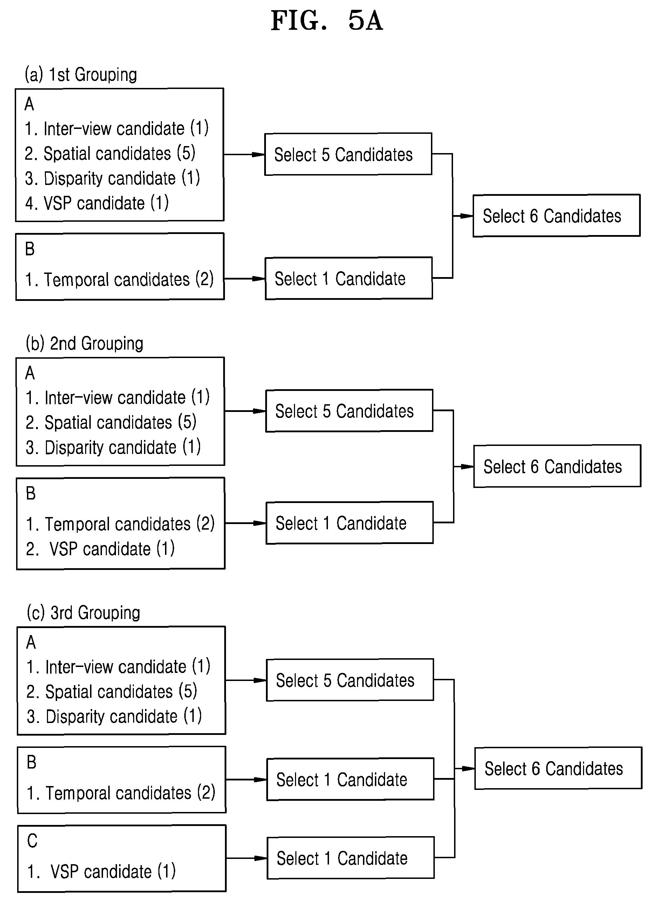

A method of using view synthesis prediction according to various embodiments will now be provided with reference to FIGS. 5A through 6B below.

FIG. 5A is diagrams for describing a process in which a multi-view video decoding apparatus adds a VSP candidate to a merge candidate list, according to an embodiment of the present disclosure. In the present embodiment, the merge candidate list may include a list including various encoding tools, various encoding modes, or merge candidate blocks for searching for and predicting a reference block in a merge mode for merge with a neighboring data unit. The merge candidate list may include candidates such as an inter-view candidate, a spatial candidate, a disparity candidate, a temporal candidate, and a VSP candidate. In this regard, the display candidate is a candidate for disparity vector compensation prediction configured from an induced disparity.

Referring to FIG. 5A(a), the merge candidate list according to an embodiment of the present disclosure may include, for example, six candidates, from among candidates such as the inter-view candidate, the spatial candidate, the disparity candidate, the temporal candidate, and the VSP candidate. The number of candidates is not limited to six, and an arbitrary number equal to or higher than one may be assigned according to used video codec. Referring to FIG. 5(a), candidates such as the inter-view candidate, the spatial candidate, the disparity candidate, and the VSP candidate are included in a group A. Also, the temporal candidate is included in a group B. Five candidates among the candidates included in the group A may be selected as merge candidates.

In this regard, the multi-view video decoding apparatus 20 may select the candidates according to priority between the candidates included in the group A. The priority between the candidates is determined within a group. When there is no candidate, the five merge candidates may be selected from candidates having a next priority. Likewise, the multi-view video decoding apparatus 20 may select one candidate from the candidates included in the group B. The merge candidate list may be include the six candidates selected as such.

Referring to FIG. 5A(b), the candidates such as the inter-view candidate, the spatial candidate, and the disparity candidate are included in the group A. The temporal candidate and the VSP candidate are included in the group B. Unlike FIG. 5A(a), the VSP candidate is not included in the group A but included in the group B. The multi-view video decoding apparatus 20 may select five candidates from the candidates included in the group A. In this regard, the candidates may be selected according to priority between the candidates included in the group A. When no candidate exists, the multi-view video decoding apparatus 20 may select the five candidates from candidates having a next priority. Likewise, the multi-view video decoding apparatus 20 may select one candidate from the candidates included in the group B. The merge candidate list may include the six candidates selected as such.

Referring to FIG. 5A(c), candidates such as the inter-view candidate, the spatial candidate, and the disparity candidate are included in the group A. The temporal candidate is included in the group B. Unlike FIGS. 5A(a) and (b), the VSP candidate is included in a group C. The multi-view video decoding apparatus 20 may select five candidates from the candidates included in the group A. In this regard, the multi-view video decoding apparatus 20 may select the candidates according to priority between the candidates included in the group A. When no candidate exists, the five merge candidates may be selected from candidates having a next priority. Likewise, the multi-view video decoding apparatus 20 may select one candidate from the candidates included in the groups B and C. Six candidates are selected again from the selected candidates as such. In this regard, merge candidates may be selected according to a priority between groups or a priority between candidates included in the groups. However, the merge candidates are not limited thereto and may be selected based on various standards. The multi-view video decoding apparatus 20 may determine the six candidates selected based on various standards to be included in the merge candidate list.

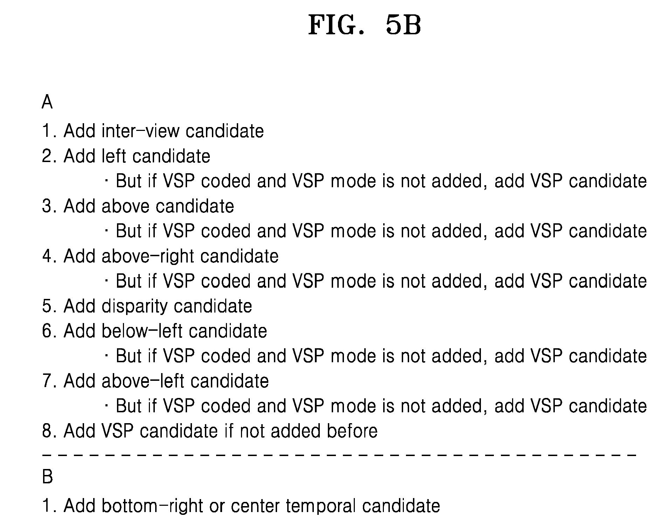

Groups classified in FIGS. 5A(a) through (c) are only examples, and the present disclosure is not limited thereto. Groups may be classified according to various forms based on characteristics of candidates included therein. Also, each group may handle and use only one candidate. Alternatively, all candidates may be handled together without using a group. Groups classified in FIGS. 5B through 5K hereinafter are also only examples, and groups may be classified in various forms based on characteristics of candidates included therein, or a group may not be used.

FIG. 5B is a diagram for describing a process of adding a view synthesis prediction candidate to a merge candidate list on the basis of priority between candidates according to an embodiment of the present disclosure.

It is assumed in the present embodiment that candidates are included in groups as shown in FIG. 5A(a).

The multi-view video decoding apparatus 20 determines whether to add an inter-view candidate to merge candidate list candidates that is to be included in a merge list within the group A.

The multi-view video decoding apparatus 20 determines whether to add a left candidate among spatial candidates to candidates that are to be included in the merge candidate list. If a left candidate block is encoded in a VSP mode, and a VSP candidate is not separately added, the multi-view video decoding apparatus 20 adds a VSP candidate for the left candidate block.

The multi-view video decoding apparatus 20 performs the same process as that performed on the left candidate to determine whether to add a candidate to candidates to be included in the merge candidate list in an order from an above candidate and an above-right candidate. If an above candidate block is encoded in a VSP mode and a VSP candidate is not yet added, the multi-view video decoding apparatus 20 adds a VSP candidate for the above candidate block. If an above-right candidate block is encoded in a VSP mode and a VSP mode is not yet added, the multi-view video decoding apparatus 20 adds a VSP candidate for the above-right candidate block.

The multi-view video decoding apparatus 20 determines whether to add a disparity candidate to the merge candidate list according to a priority.

The multi-view video decoding apparatus 20 sequentially performs the same process on below-left and above-left candidates from among spatial candidates to determine whether to sequentially add the below-left and above-left candidates to the candidates to be included in the merge candidate list. If a below-left candidate block is encoded in a VSP mode and a VSP candidate is not yet added, the multi-view video decoding apparatus 200 adds a VSP candidate for the below-left candidate block. If an above-left candidate block is encoded in a VSP mode and a VSP candidate is not yet added, the multi-view video decoding apparatus 20 adds a VSP candidate for the above-left candidate block.

If it has been determined that a VSP candidate is not added before, the multi-view video decoding apparatus 20 determines whether to add the VSP candidate for the current block according to priority.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to merge candidate list candidates within the group B according to priority.

Therefore, according to an embodiment of the present disclosure, the multi-view video decoding apparatus 20 adds a VSP candidate to the merge candidate list according to priority changed based on encoding information of a spatial candidate.

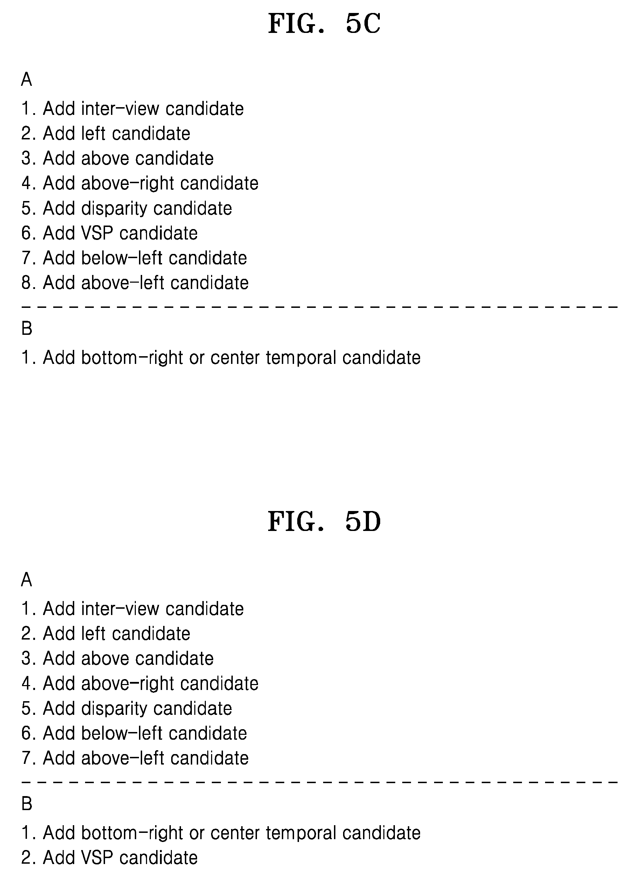

FIG. 5C is a diagram for describing a process of adding a VSP candidate to a merge candidate list on the basis of priority between candidates according to another embodiment of the present disclosure.

It is assumed in the present embodiment that candidates are included in groups as shown in FIG. 5A(a).

First, the multi-view video decoding apparatus 20 determines whether to add an inter-view candidate to candidates that are to be included in the merge candidate list. The multi-view video decoding apparatus 20 determines whether to add a left candidate among spatial candidates to candidates that are to be included in the merge candidate list. The multi-view video decoding apparatus 20 determines whether to add an above candidate to the candidates that are to be included in the merge candidate list. The multi-view video decoding apparatus 20 determines whether to add an above-right candidate to the candidates that are to be included in the merge candidate list. The multi-view video decoding apparatus 20 determines whether to add a disparity candidate to the candidates that are to be included in the merge candidate list. The multi-view video decoding apparatus 20 adds a VSP candidate to the candidates that are to be included in the merge candidate list. The multi-view video decoding apparatus 20 adds a below-left candidate to the candidates that are to be included in the merge candidate list. The multi-view video decoding apparatus 20 determines whether to add an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to merge candidate list candidates within the group B according to priority.

According to an embodiment of the present disclosure, there is a difference that the multi-view video decoding apparatus 20 adds VSP candidates to the merge candidate list according to fixed priority between candidates. In particular, the VSP candidates may be added to the merge candidate list according to the fixed priority irrespective of encoding information of spatial candidates.

FIG. 5D is a diagram for describing a process of adding a VSP candidate to a merge candidate list on the basis of priority between candidates according to another embodiment of the present disclosure.

It is assumed in the present embodiment that candidates are included in groups as shown in FIG. 5A(b).

The multi-view video decoding apparatus 20 determines whether to add an inter-view candidate to candidates that are to be included in the merge candidate list.

The multi-view video decoding apparatus 20 determines whether to add a left candidate to candidates that are to be included in the merge candidate list. The multi-view video decoding apparatus 20 determines whether to add an above candidate to the candidates that are to be included in the merge candidate list. Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. The multi-view video decoding apparatus 20 adds a below-left candidate to the candidates that are to be included in the merge candidate list. The multi-view video decoding apparatus 20 determines whether to add an above-left candidate to the candidates that are to be included in the merge candidate list.

Meanwhile, the VSP candidates are included in the group B, and the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to merge candidate list candidates within the group B according to priority. In other words, a bottom-right or center temporal candidate is first added according to priority and if a temporal candidate is not determined, it is determined whether to add a VSP candidate to the candidates of the merge candidate list.

According to an embodiment of the present disclosure, unlike FIG. 5B, there is a difference that the multi-view video decoding apparatus 20 may add vVSP candidates to the merge candidate list according to fixed priority between candidates. In particular, the VSP candidates may be added to the merge candidate list according to the fixed priority irrespective of encoding information of spatial candidates. Also, when temporal candidates are not determined, since the VSP candidates may be added to the candidates of the merge candidate list, unlike FIG. 5C, there is a high possibility that the VSP candidates may be added to the candidates of the merge candidate list.

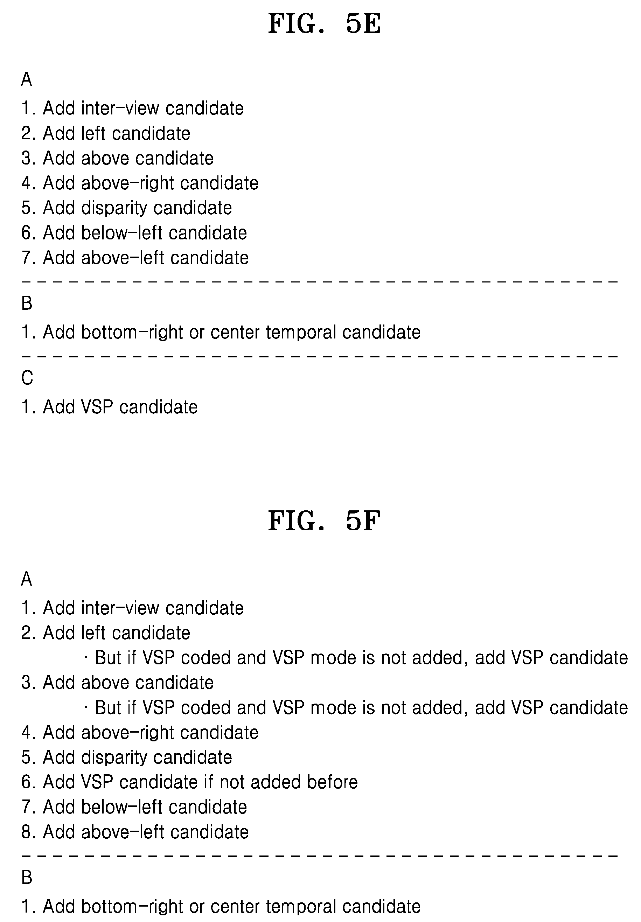

FIG. 5E is a diagram for describing a process of adding a VSP candidate to a merge candidate list on the basis of priority between candidates according to another embodiment of the present disclosure.

It is assumed in the present embodiment that candidates are included in groups as shown in FIG. 5A(c).

First, the multi-view video decoding apparatus 20 determines whether to add an inter-view candidate to candidates that are to be included in the merge candidate list. The multi-view video decoding apparatus 20 determines whether to add a left candidate to candidates that are to be included in the merge candidate list. The multi-view video decoding apparatus 20 determines whether to add an above candidate to the candidates that are to be included in the merge candidate list. The multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. Thereafter, the multi-view video decoding apparatus 20 determines whether to add a below-left candidate to the candidates that are to be included in the merge candidate list. Thereafter, the multi-view video decoding apparatus 20 adds an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority.

Meanwhile, the VSP candidates are included in the group C, and the multi-view video decoding apparatus 20 determines whether to add VSP candidates to the candidates that are to be included in the merge candidate list according to priority.

According to an embodiment of the present disclosure, there is a difference that the VSP candidates may be added to the merge candidate list according to fixed priority between candidates. In particular, the VSP candidates may be added to the merge candidate list according to the fixed priority irrespective of encoding information of spatial candidates. In particular, since the VSP candidates belong to the group C, unlike FIG. 5C, there is a high possibility that the VSP candidates may be added to the candidates of the merge candidate list. Also, unlike FIG. 5C, there is a high possibility that the VSP candidates may be included in the merge candidate list according to priority between groups.

The groups classified in FIGS. 5C through 5E are only examples, and the present disclosure is not limited thereto. The groups may be classified in various forms according to characteristics of candidates included therein. Also, the groups may not be used.

FIG. 5F is a diagram for describing a process of adding a VSP candidate to a merge candidate list on the basis of priority between candidates according to another embodiment of the present disclosure.

It is assumed in the present embodiment that candidates are included in groups as shown in FIG. 5A(a).

First, the multi-view video decoding apparatus 20 determines whether to add an inter-view candidate to candidates that are to be included in the merge candidate list. Thereafter, the multi-view video decoding apparatus 20 determines whether to add a left candidate to candidates that are to be included in the merge candidate list. If a left candidate block is encoded in a VSP mode, and a VSP candidate is not separately added to the current merge candidate list, the multi-view video decoding apparatus 20 adds a VSP candidate for the left candidate block to the candidates.

Thereafter, an above candidate is added to the candidates that are to be included in the merge candidate list. If an above candidate block is encoded in the VSP mode, and a VSP candidate is not separately added, the multi-view video decoding apparatus 20 adds a VSP candidate for the above candidate block.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. Then, if the VSP candidate has not been added before, the multi-view video decoding apparatus 20 determines whether to add the VSP candidate for the current block. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority.

According to an embodiment of the present disclosure, although priority of the VSP candidates may be changed when a left or above spatial candidate is encoded through VSP, the priority is fixed irrespective of encoding information of other spatial candidates.

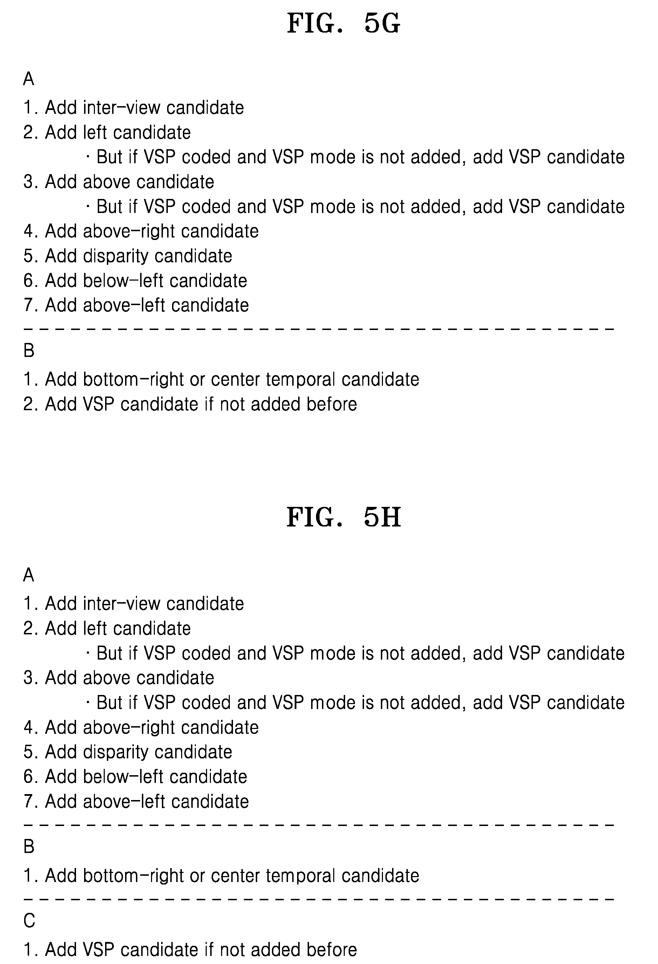

FIG. 5G is a diagram for describing a process of adding a VSP candidate to a merge candidate list on the basis of priority between candidates according to another embodiment of the present disclosure.

It is assumed in the present embodiment that candidates are included in groups as shown in FIG. 5A(b).

First, the multi-view video decoding apparatus 20 determines whether to add an inter-view candidate to candidates that are to be included in the merge candidate list.

Thereafter, the multi-view video decoding apparatus 20 determines whether to add a left candidate to the candidates that are to be included in the merge candidate list. If a left candidate block is encoded in a VSP mode, and a VSP candidate is not separately added to the current merge candidate list, the multi-view video decoding apparatus 20 adds a VSP candidate for the left candidate block to the candidates.

Thereafter, it is determined whether to add an above candidate to the candidates that are to be included in the merge candidate list. When an above candidate block is encoded in a VSP mode and a VSP candidate is not yet added to the current merge candidate list, the multi-view video decoding apparatus 20 adds a VSP candidate for the above candidate block to the candidates.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates to be included in the merge candidate list. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority. In the case of the group B, a priority between the VSP candidates is inferior to that between temporal candidates. Thus, in the group B, the temporal candidates are firstly added to the candidates to be included in the merge candidate list, and if the temporal candidates are not determined, the multi-view video decoding apparatus 20 adds the VSP candidates to the candidates to be included in the merge candidate list. However, when a left or above spatial candidate block is firstly added as a VSP candidate, the VSP candidates are not added. In this way, the multi-view video decoding apparatus 20 may select candidates that are to be added to the merge candidate list among the added candidates of the merge candidate list again. In this regard, the candidates that are to be added to the merge candidate list may be determined according to priority between groups or priority between candidates.

According to an embodiment of the present disclosure, although priority of the VSP candidates may be changed when the left or above spatial candidate is encoded through VSP, the priority is fixed irrespective of encoding information of other spatial candidates.

FIG. 5H is a diagram for describing a process of adding a VSP candidate to a merge candidate list on the basis of priority between candidates according to another embodiment of the present disclosure.

It is assumed in the present embodiment that candidates are included in groups as shown in FIG. 5A(c).

First, the multi-view video decoding apparatus 20 determines whether to add an inter-view candidate to candidates that are to be included in the merge candidate list.

Thereafter, the multi-view video decoding apparatus 20 determines whether to add a left candidate to candidates that are to be included in the merge candidate list. If a left candidate block is encoded in a VSP mode and a VSP candidate is not separately added, the multi-view video decoding apparatus 20 adds a VSP candidate for the left candidate block.

Thereafter, the multi-view video decoding apparatus 20 determines whether to add an above candidate to the candidates that are to be included in the merge candidate list. If an above candidate block is encoded in a VSP mode and a VSP candidate is not yet added, the multi-view video decoding apparatus 20 adds a VSP candidate for the above candidate block.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, in case of the group B, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority.

Meanwhile, in case of the group C, the multi-view video decoding apparatus 20 determines whether to add the VSP candidate to the candidates of the merge candidate list according to priority. When a left or above spatial candidate block is added as a VSP candidate, the multi-view video decoding apparatus 20 determines that the VSP candidate is not added. In this way, the multi-view video decoding apparatus 20 may select candidates that are to be added to the merge candidate list among the added candidates of the merge candidate list again.

According to an embodiment of the present disclosure, although priority of VSP candidates may be changed when the left or above spatial candidate is encoded through VSP, the priority is fixed irrespective of encoding information of other spatial candidates.

The groups classified in FIGS. 5F through 5H are only examples, and the present disclosure is not limited thereto. The groups may be classified in various forms according to characteristics of candidates included therein. Also, the groups may not be used.

In FIGS. 5F through 5H, it is determined whether a left block of a current block and an above block of the current block are encoded in a VSP mode, and whether to add VSP candidates for the left block of the current block and the above block of the current block to a merge candidate list, but a VSP candidate is not limited thereto. For example, it may be determined whether each of a left block, an above block an above-right block, a below-left block, and an above-left block, which are spatial candidate blocks, is encoded in a VSP mode, and whether to add a VSP candidate of each block to a merge candidate list. Also, it may be determined whether adjacent blocks of a current block, aside from a spatial candidate block, are encoded in a VSP mode, and determine whether to add a VSP candidate for each block to a merge candidate list.

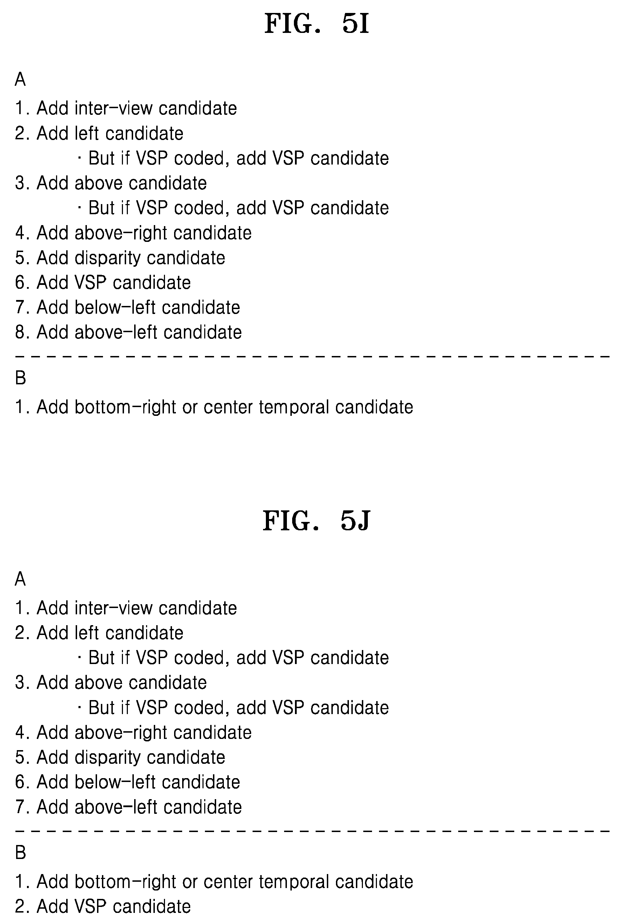

FIG. 5I is a diagram for describing a process of adding a VSP candidate to a merge candidate list on the basis of priority between candidates according to another embodiment of the present disclosure.

It is assumed in the present embodiment that candidates are included in groups as shown in FIG. 5A(a).

First, the multi-view video decoding apparatus 20 adds an inter-view candidate to candidates that are to be included in the merge candidate list. Thereafter, the multi-view video decoding apparatus 20 determines whether to add a left candidate to candidates that are to be included in the merge candidate list. If a left candidate block is encoded in a VSP mode, the multi-view video decoding apparatus 20 adds a VSP candidate for the left candidate block.

Thereafter, the multi-view video decoding apparatus 20 adds an above candidate to the candidates that are to be included in the merge candidate list. If an above candidate block is encoded in a VSP mode, the multi-view video decoding apparatus 20 adds a VSP candidate for the above candidate block.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. Then, the multi-view video decoding apparatus 20 determines whether to add a VSP candidate. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority.

According to an embodiment of the present disclosure, one VSP candidate may be included in FIGS. 5B through 5H, but in FIG. 5I, a plurality of VSP candidates may be included in a merge candidate list.

FIG. 5J is a diagram for describing a process of adding a view synthesis prediction candidate to a merge candidate list on the basis of priority between candidates according to another embodiment of the present disclosure.

It is assumed in the present embodiment that candidates are included in groups as shown in FIG. 5A(b).

First, the multi-view video decoding apparatus 20 determines whether to add an inter-view candidate to candidates that are to be included in the merge candidate list.

Thereafter, the multi-view video decoding apparatus 20 determines whether to add a left candidate to the candidates that are to be included in the merge candidate list. If a left candidate block is encoded in a VSP mode, the multi-view video decoding apparatus 20 adds a VSP candidate for the left candidate block to the candidates.

Thereafter, it is determined whether to add an above candidate to the candidates that are to be included in the merge candidate list. When an above candidate block is encoded in a VSP mode, the multi-view video decoding apparatus 20 adds a VSP candidate for the above candidate block to the candidates.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates to be included in the merge candidate list. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority. In the case of the group B, a priority between the VSP candidates is inferior to that between temporal candidates. Thus, in the group B, the temporal candidates are firstly added to the candidates to be included in the merge candidate list, and if the temporal candidates are not determined, the multi-view video decoding apparatus 20 adds the VSP candidates to the candidates to be included in the merge candidate list. In this way, the multi-view video decoding apparatus 20 may select candidates that are to be added to the merge candidate list among the added candidates of the merge candidate list again. In this regard, the candidates that are to be added to the merge candidate list may be determined according to priority between groups or priority between candidates.

According to an embodiment of the present disclosure, one VSP candidate may be included in FIGS. 5B through 5H, but in FIG. 5J, a plurality of VSP candidates may be included in a merge candidate list.

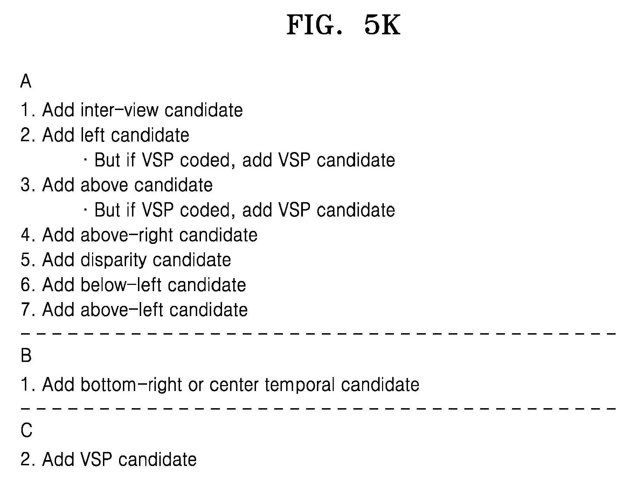

FIG. 5K is a diagram for describing a process of adding a VSP candidate to a merge candidate list on the basis of priority between candidates according to another embodiment of the present disclosure.

It is assumed in the present embodiment that candidates are included in groups as shown in FIG. 5A(c).

First, the multi-view video decoding apparatus 20 determines whether to add an inter-view candidate to candidates that are to be included in the merge candidate list.

Thereafter, the multi-view video decoding apparatus 20 determines whether to add a left candidate to candidates that are to be included in the merge candidate list. If a left candidate block is encoded in a VSP mode, the multi-view video decoding apparatus 20 adds a VSP candidate for the left candidate block.

Thereafter, it is determined whether to add an above candidate to the candidates that are to be included in the merge candidate list. If an above candidate block is encoded in a VSP mode, the multi-view video decoding apparatus 20 adds a VSP candidate for the above candidate block.

Thereafter, the multi-view video decoding apparatus 20 determines whether to add an above-right candidate to the candidates that are to be included in the merge candidate list. Thereafter, the multi-view video decoding apparatus 20 determines whether to add a disparity candidate to the candidates that are to be included in the merge candidate list. Thereafter, the multi-view video decoding apparatus 20 determines whether to add a below-left candidate to the candidates that are to be included in the merge candidate list. Thereafter, the multi-view video decoding apparatus 20 determines whether to add an above-left candidate to the candidates that are to be included in the merge candidate list.

Meanwhile, in case of the group B, the multi-view video decoding apparatus 20 first considers a bottom-right candidate of a reference PU as a temporal candidate, and if motion information of the bottom-right candidate does not exist, considers a block located at the center of the reference PU as a candidate, thereby determining whether to add one of temporal candidates to the merge candidate list candidates within the group B according to priority.

Meanwhile, in case of the group C, the multi-view video decoding apparatus 20 determines whether to add the VSP candidate to the candidates of the merge candidate list according to priority. In this way, the multi-view video decoding apparatus 20 may select candidates that are to be added to the merge candidate list among the added candidates of the merge candidate list again.

According to an embodiment of the present disclosure, one VSP candidate may be included in FIGS. 5B through 5H, but in FIG. 5K, a plurality of VSP candidates may be included in a merge candidate list.

The groups classified in FIGS. 5I through 5K are only examples, and the present disclosure is not limited thereto. The groups may be classified in various forms according to characteristics of candidates included therein. Also, the groups may not be used.

In FIGS. 5I through 5K, it is determined whether a left block of a current block and an above block of the current block are encoded in a VSP mode, and whether to add VSP candidates for the left block of the current block and the above block of the current block to a merge candidate list, but VSP candidates are not limited thereto. For example, it may be determined whether each a left block, an above block, an above-right block, a below-left block, and an above-left block, which are spatial candidate blocks, is encoded in a VSP mode, and whether to add a VSP candidate for each block to a merge candidate list. Also, it may be determined whether to add a VSP candidate for a left block of a current block to a merge candidate list by using only the left block as an adjacent block. Also, it may be determined whether adjacent blocks of a current block, aside from a spatial candidate block, are encoded in a VSP mode, and whether to add a VSP candidate for each adjacent block to a merge candidate list.

Meanwhile, although an example performed by the multi-view video decoding apparatus 20 is described above, it will be understood by one of ordinary skill in the art that the method described with reference to FIG. 5 may also be performed by the multi-view video encoding apparatus 10.

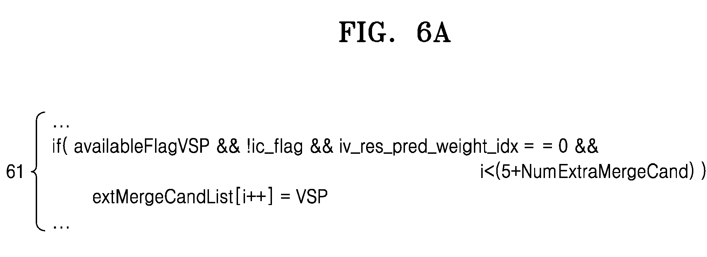

FIG. 6A illustrates a pseudo code for describing a process of adding a VSP candidate to a merge candidate list, according to an embodiment of the present disclosure.

Referring to FIG. 6A, 'extMergeCandList[i++]' is an instruction indicating the merge candidate list. Conditional sentences are sequentially executed, and thus a sequence of the conditional sentences may indicate a priority of merge candidates. It is determined whether merge candidates are to be included in the merge candidate list based on the sequence of the conditional sentences according to whether a condition is satisfied. It is assumed that the multi-view video decoding apparatus 20 processes a conditional sentence 61 for a current VSP candidate. 'availableFlagVSP' included in the conditional sentence 61 is a flag indicating whether a current prediction unit may be decoded using a VSP encoding tool. 'availabileFlagVSP' determines that the VSP encoding tool may be used in a current view ('view_synthesis_pred_flag[nuh layer id]'), and, if the current prediction unit may be prediction decoded using the VSP encoding tool, 'availableFlagVSP' becomes 1 so that the multi-view video decoding apparatus 20 determines that the current prediction unit may be decoded using the VSP encoding tool. 'ic_flag' is a flag indicating whether brightness compensation is performed on a current encoding unit. 'Iv_res_pred_weight_idx' indicates an index of a weighting factor if inter-view residual prediction is used in the current encoding unit. If 'Iv_res_pred_weight_idx' is 0, it means that residual prediction is not used in the current encoding unit. Meanwhile, NumExtraMergeCand indicates the number of candidates that are to be additionally included in the number of candidates that are to be basically included in the merge candidate list. For example, NumExtraMergeCand is determined according to whether inter-view prediction is used, if it is determined that inter-view prediction is used, NumExtraMergeCand may be determined as 1, and the number of candidates that are to be included in the merge candidate list increases by 1.

Therefore, when it is determined that the current prediction unit may be decoded using the VSP encoding tool (avilableFlag), brightness compensation is not performed on the current encoding unit (!ic_flag), residual prediction is not used in the current encoding unit (iv_res_pred_weight_idx == 0), and the number of merge candidates that may be included in the merge candidate list is not exceeded (i < 5+NumExtraMergeCand), the multi-view video decoding apparatus 20 determines that the VSP encoding tool (or an encoding mode) is added to the merge candidate list (extMergeCandList[i++]=VSP).

In this regard, i denotes an index of the merge candidate list. That is, i corresponds to a location on the merge candidate list. When a current index is smaller than the maximum candidate number of the merge candidate list, the multi-view video decoding apparatus 20 adds a VSP candidate to the merge candidate list (extMergeCandList[i++]=VSP). Thereafter, it is determined whether a next candidate is to be added to the merge candidate list by increasing an index (i++).

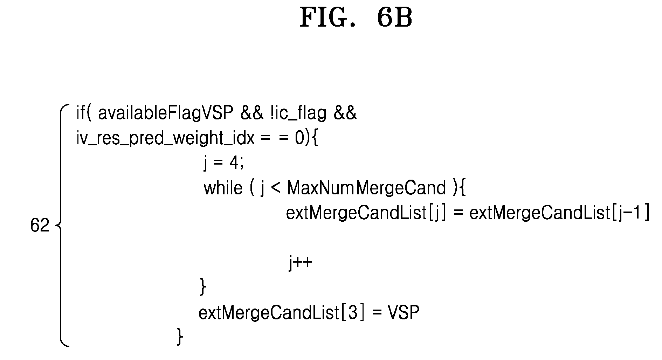

Therefore, the priority of the VSP candidates is fixed irrespective of encoding information of other spatial or temporal candidates. FIG. 6B illustrates a pseudo code for describing a process of adding a VSP candidate to a merge candidate list according to an embodiment of the present disclosure.

Some parameters are described with reference to FIG. 6A above, and thus detailed descriptions of redundant parameters are omitted. Referring to FIG. 6B, MaxNumMergCand means the number of maximum merge candidates that may be included in the merge candidate list. It is assumed that a conditional sentence 62 is processed after determining whether all merge candidates are to be included in the merge candidate list. If it is determined that a current prediction unit may be decoded using a VSP encoding tool (avilableFlagVSP), brightness compensation is not performed on the current encoding unit (!ic_flag), and residual prediction is not used in the current encoding unit (iv_res_pred_weight_idx == 0), 4 is allocated to a parameter j. It will be easily understood by one of ordinary skill in the art that a value of the parameter j is not necessarily limited to 4 and may vary.

Content of a while condition sentence (j< MaxNumMergeCnad) is repeatedly processed if the parameter j is smaller than the number of maximum merge candidates. Upon reviewing a process processed within the while condition sentence, if a condition is satisfied, a candidate included in an index j-1 is allocated to the merge candidate list as a next candidate (extMergeCandList[j]=extMergeCandList[j-1]). For example, when j=4, a merge candidate in a space within an arrangement indicated by index 3 of an arrangement of the merge candidate list is allocated to a space within an arrangement corresponding to index 4 (extMergeCandList[4]=extMergeCandList[3]). That is, a candidate within an arrangement of the merge candidate list indicated by j-1 is allocated to a space within an arrangement of the merge candidate list indicated by j. If a value of j is satisfied, the value of j is increased by one (j++), and it is determined again whether a condition of the while conditional statement is satisfied. This process repeatedly continues until the condition of the while conditional statement is not satisfied. In conclusion, in the while conditional statement, the merge candidate already included in the space within the arrangement of the merge candidate list indicated by MaxNumMergeCand-2 from index 3 is moved back by a space and thus allocated to the space within the arrangement of the merge candidate list indicated by MaxNumMergeCand-1 from index 4. The space to which the merge candidate finally included in the arrangement of the merge candidate list is allocated via a candidate in a merge candidate list indicated by a previous index, and thus the merge candidate finally included in the arrangement of the merge candidate list is not included in the arrangement of the merge candidate list any more.

If then the while condition sentence is not satisfied, the content of the while condition sentence is not processed, and a VSP candidate is allocated to a space in the merge list arrangement extMergeCandList indicated by index 3.

Therefore, although a maximum number of merge candidates are previously included in the arrangement of the merge candidate list, the VSP candidate is allocated to the space in the arrangement of the merge candidate list indicated by index 3, the merge candidates included in the space and a merge candidate greater than index 3 are allocated to a space in an arrangement of the merge candidate list indicated by a next index, and a last candidate of the arrangement of the merge candidate list is not included in the arrangement of the merge candidate list any more. The pseudo code is executed as described above, and thus the multi-view video decoding apparatus 20 allows the VSP candidate in an always fixed location (the space in the arrangement of the merge candidate list indicated by index 3) in the merge candidate list irrespective of encoding information of spatial or temporal candidates.

Meanwhile, although an example performed by the multi-view video decoding apparatus 20 using VSP is described above, it will be understood by one of ordinary skill in the art that the method described with reference to FIG. 6 may also be performed by the multi-view video encoding apparatus 10.

The multi-view video encoding apparatus 10 and the multi-view video decoding apparatus 20 using VSP candidates are described with reference to FIGS. 1A through 6B above. According to the multi-view video encoding apparatus 10 and the multi-view video decoding apparatus 20 according to various embodiments, when a current block is prediction encoded in a merge mode, a VSP candidate may be a merge candidate according to a fixed priority irrespective of encoding information of neighboring data units. Also, the multi-view video decoding apparatus 20 generates a plurality of groups, adds candidates in the generated groups, selects candidates that are to be included in merge candidates from the candidates included in the groups, and determines merge candidates from the selected merge candidates according to priority between the merge candidates or priority the candidates included in the merge candidates. Thus, when the multi-view video decoding apparatus 20 performs decoding using the same candidate according to composition of the candidates included in the groups or priority between the groups and between the candidates included in the groups, the multi-view video decoding apparatus 20 may determine a possibility that the candidate is to be determined as a merge candidate.

In the multi-view video encoding apparatus 10 according to an embodiment and the multi-view video decoding apparatus 20 according to an embodiment, as described above, video data may be split into coding units having a tree structure, and coding units, prediction units, and transformation units are used for inter layer prediction or inter prediction on the coding units. Hereinafter, a video encoding method and apparatus and a video decoding method and apparatus based on coding units and transformation units having a tree structure according to an embodiment will be described with reference to FIGS. 7 through 19.

In principle, during encoding/decoding for multi-view video, encoding/decoding processes for first view images and encoding/decoding processes for second view images are separately performed. That is, when inter-view prediction is performed on a multi-view video, encoding/decoding results of a single-view video are referred to each other, but separate encoding/decoding processes are performed for respective single-view videos.

For convenience of description, since a video encoding process and a video decoding process based on a coding unit of a tree structure, which will be described with reference to FIGS. 7 through 19, are performed on a single-view video, inter prediction and motion compensation will be described. However, as described with reference to FIGS. 1A through 6, inter-view prediction and compensation between base view images and second view images are performed to encode/decode a video stream.

Accordingly, in order for the multi-view video encoding apparatus 10 according to an embodiment to encode a multi-view video based on coding units having a tree structure, the multi-view video encoding apparatus 10 according to an embodiment may include as many video encoding apparatuses 100 of FIG. 7 as the number of views of the multi-view video so as to perform video encoding according to each single-layer video, thereby controlling each video encoding apparatus 100 to encode an assigned single-layer video. Also, the multi-view video encoding apparatus 10 may perform inter-view prediction by using an encoding result of individual single views of each video encoding apparatus 100. Accordingly, the multi-view video encoding apparatus 10 may generate a base view video stream and a second view video stream, which include encoding results according to views.

Similarly, in order for the multi-view video decoding apparatus 20 according to an embodiment to decode a multi-view video based on coding units having a tree structure, the multi-view video decoding apparatus 10 may include as many video decoding apparatuses 200 of FIG. 8 as the number of views of the multi-view video so as to perform video decoding according to views with respect to a received first view video stream and a received second view video stream, thereby controlling each video decoding apparatus 200 to decode an assigned single-view video. Also, the multi-view video decoding apparatus 200 may perform inter-view compensation by using a decoding result of individual single view of each video decoding apparatus 200. Accordingly, the multi-view video decoding apparatus 20 may generate first view images and second view images, which are reconstructed according to views.

FIG. 7 is a block diagram of a video encoding apparatus 100 based on coding units according to a tree structure, according to an embodiment of the present disclosure.

The video encoding apparatus 100 according to an embodiment involving video prediction based on coding units according to a tree structure includes a coding unit determiner 120 and an output unit 130. Hereinafter, for convenience of description, the video encoding apparatus 10 according to an embodiment involving video prediction based on coding units according to a tree structure will be abbreviated to the 'video encoding apparatus 100'.

The coding unit determiner 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a final depth by encoding the image data in the deeper coding units according to depths, according to the maximum coding unit of the current picture, and selecting a depth having the least encoding error. The determined final depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one final depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the final depths may differ according to regions in the image data. Thus, one or more final depths may be determined in one maximum coding unit, and the image data of the maximum coding unit may be divided according to coding units of at least one final depth.

Accordingly, the coding unit determiner 120 according to an embodiment may determine coding units having a tree structure included in the maximum coding unit. The 'coding units having a tree structure' according to an embodiment include coding units corresponding to a depth determined to be the final depth, from among all deeper coding units included in the maximum coding unit. A coding unit of a final depth may be hierarchically determined according to depths in the same region of the maximum coding unit, and may be independently determined in different regions. Similarly, a final depth in a current region may be independently determined from a final depth in another region.

A maximum depth according to an embodiment is an index related to the number of splitting times from a maximum coding unit to a minimum coding unit. A first maximum depth according to an embodiment may denote the total number of splitting times from the maximum coding unit to the minimum coding unit. A second maximum depth according to an embodiment may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a final depth according to an embodiment, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition mode according to an embodiment include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a transformation unit having a size smaller than or equal to the coding unit. For example, the transformation unit may include a data unit for an intra mode and a transformation unit for an inter mode.

The transformation unit in the coding unit may be recursively split into smaller sized regions in a manner similar to that in which the coding unit is split according to the tree structure, according to an embodiment. Thus, residual data in the coding unit may be split according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Split information according to depths requires not only information about the depth, but also about information related to prediction encoding and transformation. Accordingly, the coding unit determiner 120 not only determines a depth having a least encoding error, but also determines a partition mode in a prediction unit, a prediction mode according to prediction units, and a size of a transformation unit for transformation.

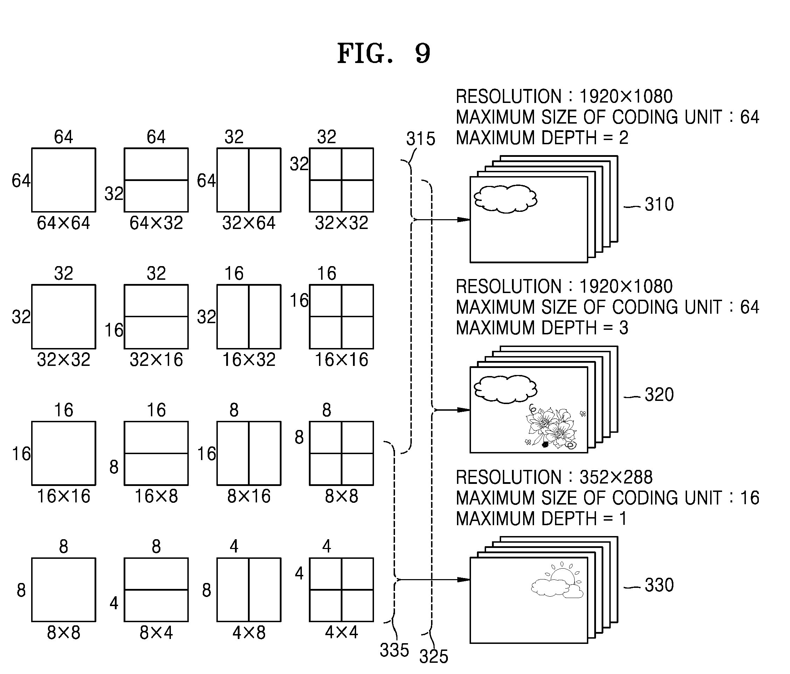

Coding units according to a tree structure in a maximum coding unit and methods of determining a prediction unit/partition, and a transformation unit, according to embodiments, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one depth determined by the coding unit determiner 120, and the split information according to depths, in bitstreams.

The encoded image data may be obtained by encoding residual data of an image.

The split information according to depths may include information about the coded depth, about the partition mode in the prediction unit, the prediction mode, and split of the transformation unit.

Information about the final depth may be defined by using split information according to depths, which indicates whether encoding is performed on coding units of a lower depth instead of a current depth. If the current depth of the current coding unit is the depth, the current coding unit is encoded, and thus the split information may be defined not to split the current coding unit to a lower depth. Alternatively, if the current depth of the current coding unit is not the depth, the encoding is performed on the coding unit of the lower depth, and thus the split information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and at least one piece of split information is determined for a coding unit of a depth, the at least one piece of split information may be determined for one maximum coding unit. Also, a depth of the image data of the maximum coding unit may be different according to locations since the image data is hierarchically split according to depths, and thus a depth and split information may be set for the image data.

Accordingly, the output unit 130 according to an embodiment may assign encoding information about a corresponding depth and an encoding mode to at least one of the coding unit, the prediction unit, and a minimum unit included in the maximum coding unit.

The minimum unit according to an embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

In the video encoding apparatus 100 according to the simplest embodiment, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to an embodiment, image compression efficiency may be increased since a coding unit is adjusted while considering characteristics of an image while increasing a maximum size of a coding unit while considering a size of the image.

The multi-view video encoding apparatus 10 described above with reference to FIG. 1A may include as many video encoding apparatuses 100 as the number of views, in order to encode single-view images according to views of a multi-view video. For example, the multi-view video encoding apparatus 10 may include one video encoding apparatus 100 in a first view and as many video encoding apparatuses 100 as the number of second views.

When the video encoding apparatus 100 encodes first view images, the coding unit determiner 120 may determine, for each maximum coding unit, a prediction unit for inter-prediction according to coding units having a tree structure, and perform inter-prediction according to prediction units.

Even when the video encoding apparatus 100 encodes second view images, the coding unit determiner 120 may determine, for each maximum coding unit, coding units and prediction units having a tree structure, and perform inter-prediction according to prediction units.

The video encoding apparatus 100 may encode a brightness difference between a first view image and a second view image in order to compensate for the brightness difference. However, whether to perform brightness compensation may be determined according to an encoding mode of a coding unit. For example, the brightness compensation may be performed only on a prediction unit of 2Nx2N.

FIG. 8 is a block diagram of a video decoding apparatus 200 based on coding units according to a tree structure, according to various embodiments.

The video decoding apparatus 200 according to an embodiment that involves video prediction based on coding units having a tree structure includes a receiver 210, an image data and encoding information extractor 220, and an image data decoder 230. For convenience of description, the video decoding apparatus 200 according to an embodiment that involves video prediction based on coding units having a tree structure will be abbreviated to the 'video decoding apparatus 200'.

Definitions of various terms, such as a coding unit, a depth, a prediction unit, a transformation unit, and various types of split information, for decoding operations of the video decoding apparatus 200 according to an embodiment are identical to those described with reference to FIG. 7 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts a final depth and split information for the coding units having a tree structure according to each maximum coding unit, from the parsed bitstream. The extracted final depth and the split information is output to the image data decoder 230. In other words, the image data in a bit stream is split into the maximum coding unit so that the image data decoder 230 decodes the image data for each maximum coding unit.

The depth and split information according to the maximum coding unit may be set for at least one piece of depth information, and split information according to depths may include information about a partition mode of a corresponding coding unit, about a prediction mode, and split of a transformation unit. Also, split information according to depths may be extracted as the depth information.

The depth and the split information according to each maximum coding unit extracted by the image data and encoding information extractor 220 are the depth and the split information determined to generate a minimum encoding error when an encoder, such as the video encoding apparatus 100 according to an embodiment, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information according to an embodiment about the depth and the encoding mode may be assigned to a predetermined data unit from among a corresponding coding unit, a prediction unit, and a minimum unit, the image data and encoding information extractor 220 may extract the depth and the split information according to the predetermined data units. If the depth and the split information of a corresponding maximum coding unit is recorded according to predetermined data units, the predetermined data units to which the same depth and the split information are assigned may be inferred to be the data units included in the same maximum coding unit.

The image data decoder 230 may reconstruct the current picture by decoding the image data in each maximum coding unit based on the depth and the split information according to the maximum coding units. In other words, the image data decoder 230 may decode the encoded image data based on the extracted information about the partition mode, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial region of the coding unit may be reconstructed.

The image data decoder 230 may determine a depth of a current maximum coding unit by using split information according to depths. If the split information indicates that image data is no longer split in the current depth, the current depth is a depth. Accordingly, the image data decoder 230 may decode encoded data in the current maximum coding unit by using the information about the partition mode of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The multi-view video decoding apparatus 20 described with reference to FIG. 2A may include as many video decoding apparatuses 200 as the number of views in order to decode the received first view image stream and second view image stream to reconstruct first view images and second view images.

When a first view image stream is received, the image data decoder 230 of the video decoding apparatus 200 may split samples of first view images that are extracted from the first view image stream by the extractor 220 into coding units according to a tree structure of a maximum coding unit. The image data decoder 230 may perform motion compensation on respective prediction units for inter prediction for each respective coding unit according to a tree structure of the samples of the first view images, to reconstruct the first view images.

When a second view image stream is received, the image data decoder 230 of the video decoding apparatus 200 may split samples of second view images that are extracted from the second view image stream by the extractor 220 into coding units according to a tree structure of a maximum coding unit. The image data decoder 230 may perform motion compensation on respective prediction units for inter prediction of the samples of the second view images to reconstruct the second view images.

The extractor 220 may obtain information relating to a brightness error between first and second view images from a bitstream in order to compensate for the brightness difference. However, whether to perform brightness compensation may be determined according to an encoding mode of a coding unit. For example, the brightness compensation may be performed only on a prediction unit of 2Nx2N.

The video decoding apparatus 200 may obtain information about a coding unit that generates the minimum encoding error when encoding is recursively performed for each maximum coding unit, and may use the information to decode the current picture. In other words, the coding units having the tree structure determined to be the appropriate coding units in each maximum coding unit may be decoded.

Accordingly, even if image data has high resolution and a large amount of data, the image data may be efficiently decoded and reconstructed by using appropriate split information, which are adaptively determined according to characteristics of the image data, by using information about an optimum encoding mode received from an encoder.

FIG. 9 is a diagram for describing a concept of coding units according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

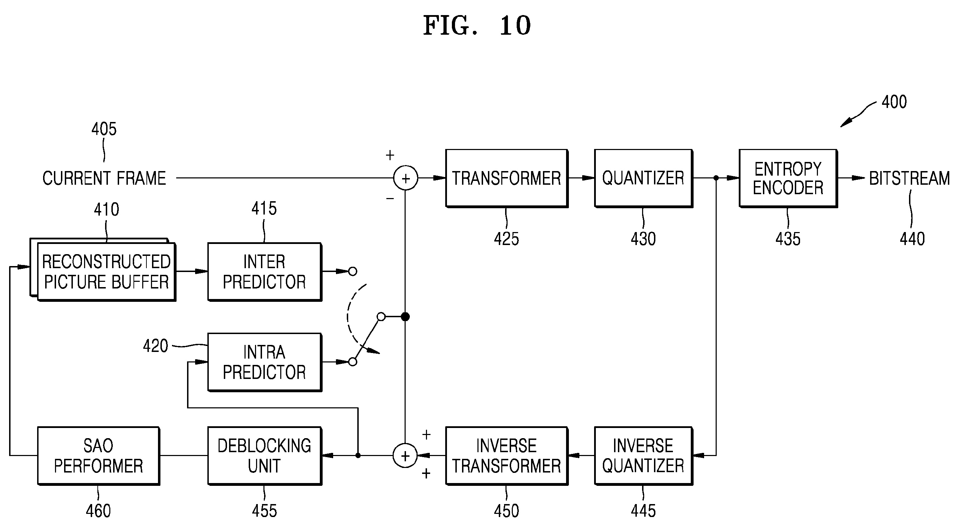

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

FIG. 10 is a block diagram of an image encoder 400 based on coding units, according to various embodiments.

The image encoder 400 according to an embodiment performs operations necessary for encoding image data in the coding unit determiner 120 of the video encoding apparatus 100. In other words, an intra predictor 420 performs intra prediction on coding units in an intra mode according to prediction units, from among a current frame 405, and an inter predictor 415 performs inter prediction on coding units in an inter mode by using a current image 405 and a reference image obtained from a reconstructed picture buffer 410 according to prediction units. The current image 405 may be split into maximum coding units and then the maximum coding units may be sequentially encoded. In this regard, the maximum coding units that are to be split into coding units having a tree structure may be encoded.

Residue data is generated by removing prediction data regarding coding units of each mode that is output from the intra predictor 420 or the inter predictor 415 from data regarding encoded coding units of the current image 405, and is output as a quantized transformation coefficient according to transformation units through a transformer 425 and a quantizer 430. The quantized transformation coefficient is reconstructed as the residue data in a space domain through an inverse quantizer 445 and an inverse transformer 450. The reconstructed residue data in the space domain is added to prediction data for coding units of each mode that is output from the intra predictor 420 or the inter predictor and thus is reconstructed as data in a space domain for coding units of the current image 405. The reconstructed data in the space domain is generated as reconstructed images through a de-blocking unit 455 and an SAO performer 460 and the reconstructed images are stored in the reconstructed picture buffer 410. The reconstructed images stored in the reconstructed picture buffer 410 may be used as reference images for inter prediction of another image. The transformation coefficient quantized by the transformer 425 and the quantizer 430 may be output as a bitstream 440 through an entropy encoder 435.

In order for the image encoder 400 according to an embodiment to be applied in the video encoding apparatus 100, all elements of the image encoder 400, i.e., the inter predictor 415, the intra predictor 420, the transformer 425, the quantizer 430, the entropy encoder 435, the inverse quantizer 445, the inverse transformer 450, the de-blocking unit 455, and the SAO performer 460, perform operations based on each coding unit among coding units having a tree structure according to each maximum coding unit.

Specifically, the intra predictor 420 and the inter predictor 415 may determine a partition mode and a prediction mode of each coding unit among the coding units having a tree structure in consideration of a maximum size and a maximum depth of a current maximum coding unit, and the transformer 425 may determine whether to split a transformation unit having a quad tree structure in each coding unit among the coding units having a tree structure.

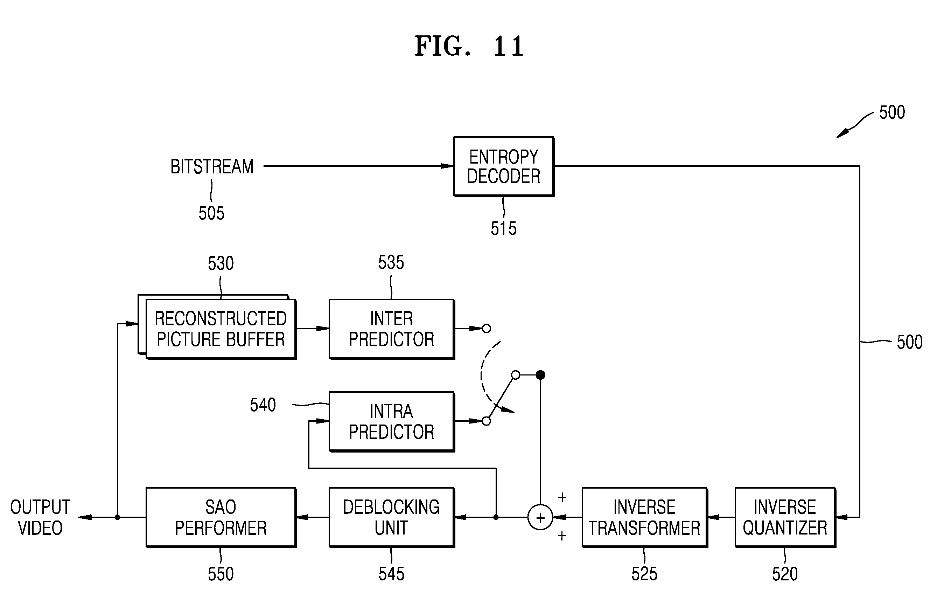

FIG. 11 is a block diagram of an image decoder 500 based on coding units, according to various embodiments.

An entropy decoder 515 parses encoded image data to be decoded and encoding information required for decoding from a bitstream 505. The encoded image data is a quantized transformation coefficient from which residue data is reconstructed by an inverse quantizer 520 and an inverse transformer 525.

An intra predictor 540 performs intra prediction on coding units in an intra mode according to each prediction unit. An inter predictor 535 performs inter prediction on coding units in an inter mode from among the current image for each prediction unit by using a reference image obtained from a reconstructed picture buffer 530.

Prediction data and residue data regarding coding units of each mode, which passed through the intra predictor 540 and the inter predictor 535, are summed, and thus data in a space domain regarding coding units of the current image 405 may be reconstructed, and the reconstructed data in the space domain may be output as a reconstructed image 560 through a de-blocking unit 545 and an SAO performer 550. Reconstructed images stored in the reconstructed picture buffer 530 may be output as reference images.

In order to decode the image data in the image data decoder 230 of the video decoding apparatus 200, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the inverse quantizer 520, the inverse transformer 525, the inter predictor 535, the deblocking unit 545, and the SAO performer 550 may perform operations based on coding units having a tree structure for each maximum coding unit.

In particular, the intra predictor 540 and the inter predictor 535 may determine a partition and a prediction mode for each of the coding units having a tree structure, and the inverse transformer 525 may determine whether to split a transformation unit having a quad tree structure for each of the coding units.

The encoding operation of FIG. 10 and the decoding operation of FIG. 11 respectively describe video stream encoding and decoding operations in a single layer. Thus, if the multi-view video decoding apparatus 10 of FIG. 1A encodes video streams of two or more layers, the image encoder 400 may be included for each layer. Similarly, if the multi-view video decoding apparatus 20 of FIG. 2A decodes video streams of two or more layers, the image decoder 500 may be included for each layer.

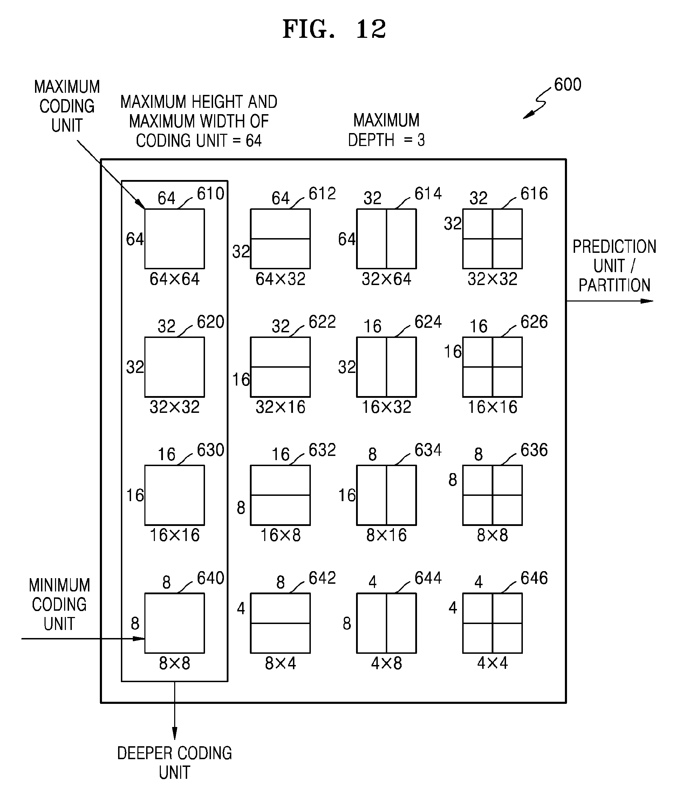

FIG. 12 is a diagram illustrating deeper coding units according to depths, and partitions, according to various embodiments.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 of coding units according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one depth of the coding units constituting the maximum coding unit 610, the coding unit determiner 120 of the video encoding apparatus 100 according to an embodiment performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the depth and a partition mode of the coding unit 610.

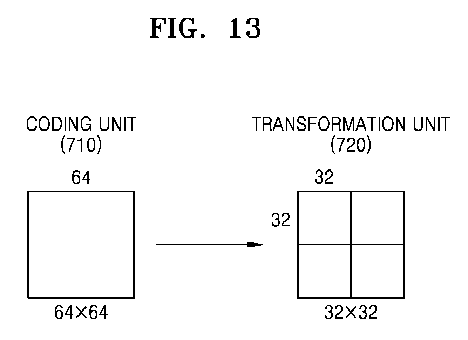

FIG. 13 is a diagram for describing a relationship between a coding unit and transformation units, according to an embodiment of the present disclosure.

FIG. 13 is a diagram for describing a relationship between a coding unit and transformation units, according to various embodiments.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of a coding unit 710 is 64x64, transformation may be performed by using a transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

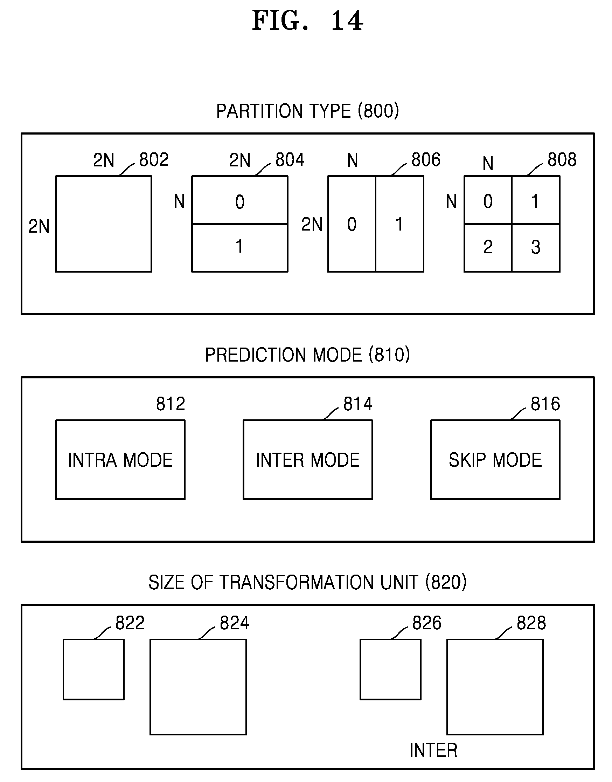

FIG. 14 is a diagram for describing encoding information of coding units corresponding to a depth, according to various embodiments.

The output unit 130 of the video encoding apparatus 100 according to an embodiment may encode and transmit information 800 about a partition mode, information 810 about a prediction mode, and information 820 about a size of a transformation unit for each coding unit corresponding to a coded depth, as split information.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 according to an embodiment may extract and use the information 800, 810, and 820 for decoding, according to each deeper coding unit.

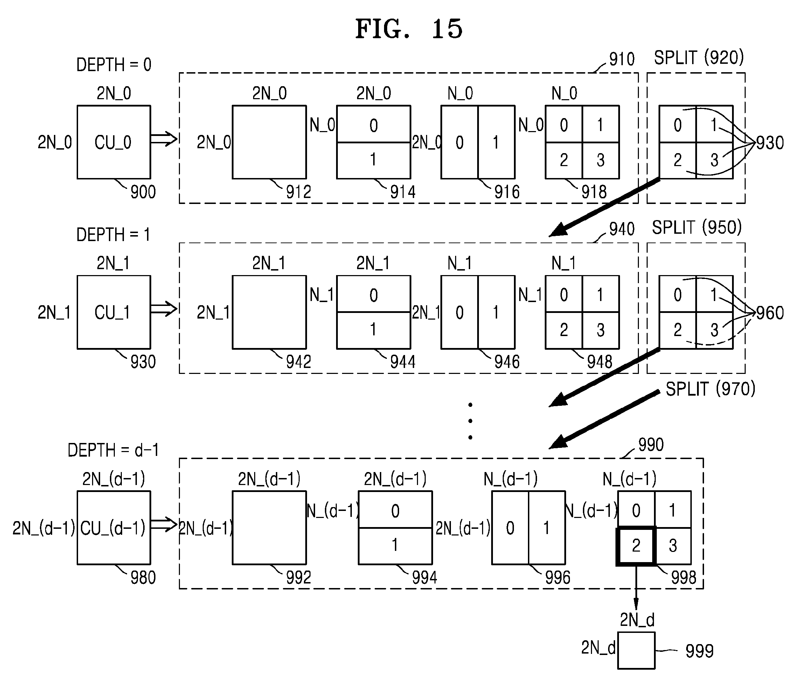

FIG. 15 is a diagram of deeper coding units according to depths, according to various embodiments.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition mode 912 having a size of 2N_0x2N_0, a partition mode 914 having a size of 2N_0xN_0, a partition mode 916 having a size of N_0x2N_0, and a partition mode 918 having a size of N_0xN_0. FIG. 9 only illustrates the partition types 912 through 918 which are obtained by symmetrically splitting the prediction unit 910, but a partition mode is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition mode. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition modes 912 through 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition mode 942 having a size of 2N_1x2N_1, a partition mode 944 having a size of 2N_1xN_1, a partition mode 946 having a size of N_1x2N_1, and a partition mode 948 having a size of N_1xN_1.

If an encoding error is the smallest in the partition mode 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition mode 992 having a size of 2N_(d-1)x2N_(d-1), a partition mode 994 having a size of 2N_(d-1)xN_(d-1), a partition mode 996 having a size of N_(d-1)x2N_(d-1), and a partition mode 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition modes 992 through 998 to search for a partition mode having a minimum encoding error.

Even when the partition mode 998 has the minimum encoding error, since a maximum depth is d, a coding unit CU_(d-1) having a depth of d-1 is no longer split to a lower depth, and a depth for the coding units constituting a current maximum coding unit 900 is determined to be d-1 and a partition mode of the current maximum coding unit 900 may be determined to be N_(d-1)xN_(d-1). Also, since the maximum depth is d, split information for a coding unit 952 having a depth of d-1 is not set.

A data unit 999 may be a 'minimum unit' for the current maximum coding unit. A minimum unit according to an embodiment may be a square data unit obtained by splitting a minimum coding unit having a lowermost depth by 4. By performing the encoding repeatedly, the video encoding apparatus 100 according to an embodiment may select a depth having the least encoding error by comparing encoding errors according to depths of the coding unit 900 to determine a depth, and set a corresponding partition mode and a prediction mode as an encoding mode of the depth.

As such, the minimum encoding errors according to depths are compared in all of the depths of 1 through d, and a depth having the least encoding error may be determined as a depth. The coded depth, the partition mode of the prediction unit, and the prediction mode may be encoded and transmitted as split information. Also, since a coding unit is split from a depth of 0 to a depth, only split information of the depth is set to 0, and split information of depths excluding the depth is set to 1.

The image data and encoding information extractor 220 of the video decoding apparatus 200 according to an embodiment may extract and use the information about the depth and the prediction unit of the coding unit 900 to decode the partition 912. The video decoding apparatus 200 according to an embodiment may determine a depth, in which split information is 0, as a depth by using split information according to depths, and use split information of the corresponding depth for decoding.

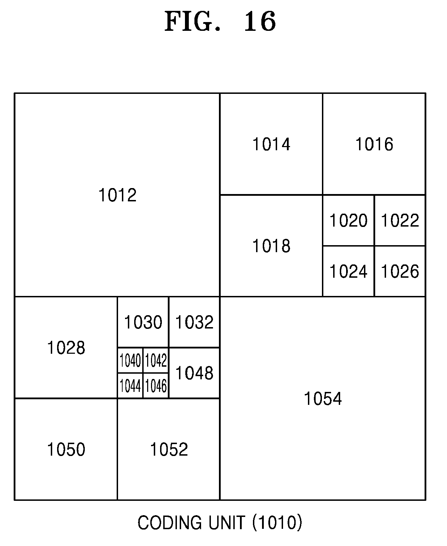

FIGS. 16 through 18 are diagrams for describing a relationship between coding units, prediction units, and transformation units, according to various embodiments.

Coding units 1010 are coding units having a tree structure, corresponding to depths determined by the video encoding apparatus 100 according to an embodiment, in a maximum coding unit. Prediction units 1060 are partitions of prediction units of each of the coding units 1010, and transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition modes in the coding units 1014, 1022, 1050, and 1054 have a size of 2NxN, partition modes in the coding units 1016, 1048, and 1052 have a size of Nx2N, and a partition mode of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 according to an embodiment may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition mode, information about a prediction mode, and information about a size of a transformation unit. Table 1 shows the encoding information that may be set by the video encoding and decoding apparatuses 100 and 200 according to an embodiment.

Table 1

| Split Information 0 (Encoding on Coding Unit having Size of 2Nx2N and Current Depth of d) | | | Split Information 1 |
|---|---|---|---|
| Prediction Mode | Partition Mode | Size of Transformation Unit | |

(continued)

| Intra Inter | Symmetrical Partition Mode | Asymmetrical Partition Mode | Split Information 0 of Transformation Unit | Split Information 1 of Transformation Unit | Repeatedly Encode Coding Units having Lower Depth of d+1 |
|---|---|---|---|---|---|
| Skip (Only 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 according to an embodiment may output the encoding information about the coding units having a tree structure, and the image data and encoding information extractor 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a depth, and thus information about a partition mode, prediction mode, and a size of a transformation unit may be defined for the depth. If the current coding unit is further split according to the split information, encoding is independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The information about the partition mode may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition mode of the current coding unit is an asymmetrical partition mode, the size of the transformation unit may be N/2xN/2.

The encoding information about coding units having a tree structure, according to an embodiment, may include at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

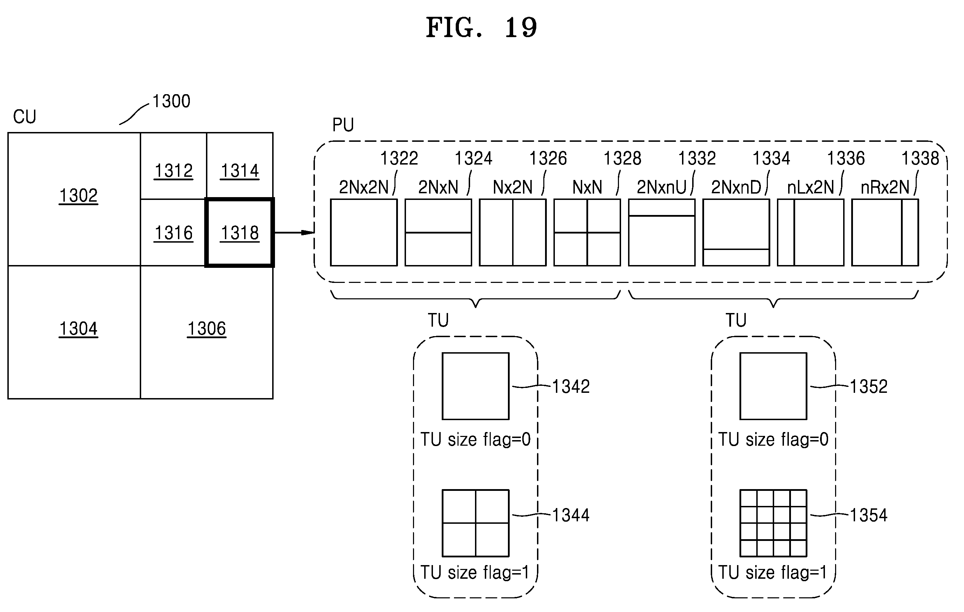

FIG. 19 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of depths. Here, since the coding unit 1318 is a coding unit of a depth, split information may be set to 0. Information about a partition mode of the coding unit 1318 having a size of 2Nx2N may be set to be one of a partition mode 1322 having a size of 2Nx2N, a partition mode 1324 having a size of 2NxN, a partition mode 1326 having a size of Nx2N, a partition mode 1328 having a size of NxN, a partition mode 1332 having a size of 2NxnU, a partition mode 1334 having a size of 2NxnD, a partition mode 1336 having a size of nLx2N, and a partition mode 1338 having a size of nRx2N.

Split information (TU size flag) of a transformation unit is a type of a transformation index. The size of the transformation unit corresponding to the transformation index may be changed according to a prediction unit type or partition mode of the coding unit.

For example, when the partition mode is set to be symmetrical, i.e. the partition mode 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition mode is set to be asymmetrical, i.e., the partition mode 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 19, the TU size flag is a flag having a value or 0 or 1, but the TU size flag according to an embodiment is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment, together with a maximum size and minimum size of the transformation unit. The video encoding apparatus 100 according to an embodiment is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 according to an embodiment may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max (\text{MinTransformSize}, \text{RootTuSize}/(2^{\wedge}\text{MaxTransformSizeIndex})) \ ... \ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \ ......... \ (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ..........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 8 through 19, image data of a spatial region is encoded for each coding unit of a tree structure. According to the video decoding method based on coding units having a tree structure, decoding is performed for each maximum coding unit to reconstruct image data of a spatial region. Thus, a picture and a video that is a picture sequence may be reconstructed. The reconstructed video may be reproduced by a reproducing apparatus, stored in a storage medium, or transmitted through a network.

The embodiments according to the present disclosure may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the multi-view video encoding method and/or the video encoding method described above with reference to FIGS. 1A through 19 will be collectively referred to as a 'video encoding method of the present disclosure'. In addition, the multi-view video decoding method and/or the video decoding method described above with reference to FIGS. 1A through 20 will be referred to as a 'video decoding method of the present disclosure'.

Also, a video encoding apparatus including the multi-view video encoding apparatus 10, the video encoding apparatus 100, or the image encoder 400, which has been described with reference to FIGS. 1A through 19, will be referred to as a 'video encoding apparatus of the present disclosure'. In addition, a video decoding apparatus including the multi-view video decoding apparatus 20, the video decoding apparatus 200, or the image decoder 500, which has been descried with reference to FIGS. 1A through 19, will be referred to as a 'video decoding apparatus of the present disclosure'.

A computer-readable recording medium storing a program, e.g., a disc 26000, according to an embodiment of the present disclosure will now be described in detail.

FIG. 20 is a diagram of a physical structure of the disc 26000 in which a program is stored, according to various embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000 according to the embodiment, a program that executes the quantization parameter determining method, the video encoding method, and the video decoding method described above may be assigned and stored.

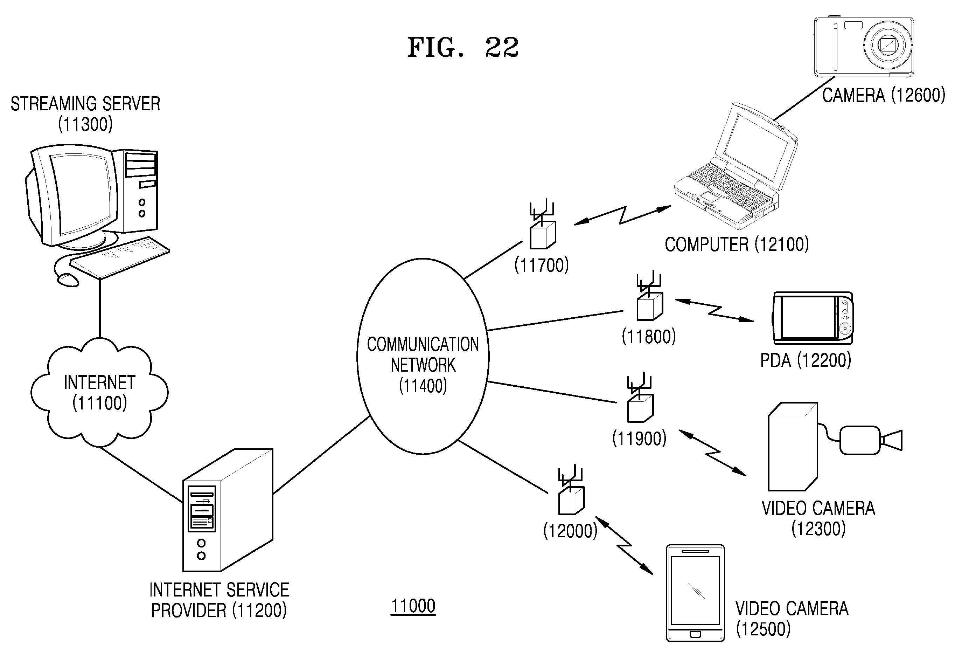

A computer system embodied using a storage medium that stores a program for executing the video encoding method and the video decoding method as described above will now be described with reference to FIG. 22.

FIG. 21 is a diagram of a disc drive 26800 for recording and reading a program by using the disc 26000. A computer system 27000 may store a program that executes at least one of the video encoding method and the video decoding method of the present disclosure, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one of the video encoding method and the video decoding method of the present disclosure may be stored not only in the disc 26000 illustrated in FIG. 20 or 21 but also in a memory card, a ROM cassette, or a solid state drive (SSD).

A system to which the video encoding method and a video decoding method described above are applied will be described below.

FIG. 22 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

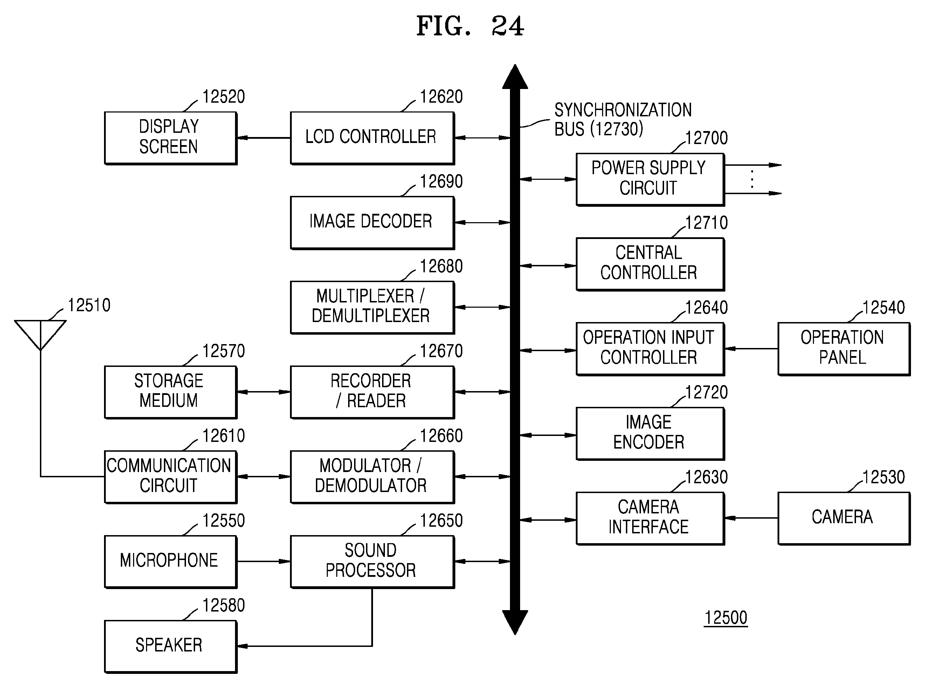

However, the content supply system 11000 is not limited to as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 according to an embodiment may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of the video encoding apparatus and the video decoding apparatus of the present disclosure.

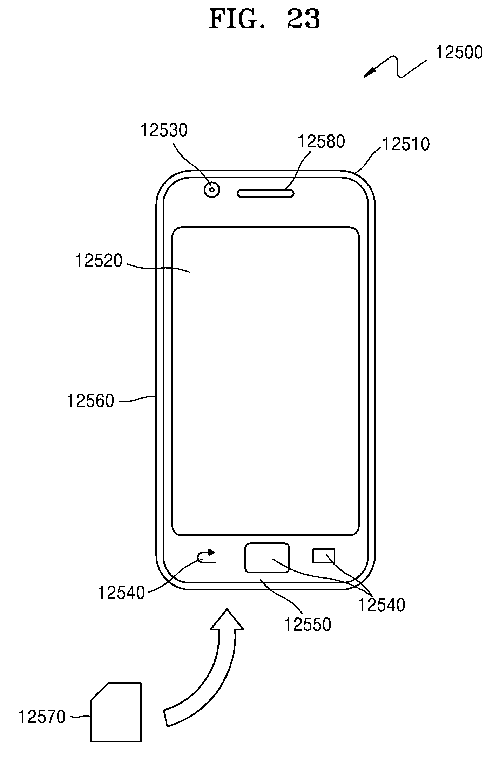

The mobile phone 12500 included in the content supply system 11000 according to an embodiment will now be described in greater detail with referring to FIGS. 23 and 24.

FIG. 23 illustrates an external structure of the mobile phone 12500 to which the video encoding method and the video decoding method of the present disclosure are applied, according to various embodiments. The mobile phone 12500 may be a smart phone, the functions of which are not limited and a large number of the functions of which may be changed or expanded.

The mobile phone 12500 includes an internal antenna 12510 via which a radiofrequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 24 illustrates an internal structure of the mobile phone 12500, according to an embodiment of the present disclosure. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method of the present disclosure described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus of the present disclosure described above. The image decoding unit 12690 may decode the encoded video data to obtain reconstructed video data and provide the reconstructed video data to the display screen 12520 via the LCD controller 12620, by using the video decoding method of the present disclosure described above.

Thus, the data of the video file accessed at the Internet website may be displayed on the display screen 12520.

At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus of the present disclosure, may be a transceiving terminal including only the video encoding apparatus of the present disclosure, or may be a transceiving terminal including only the video decoding apparatus of the present disclosure.

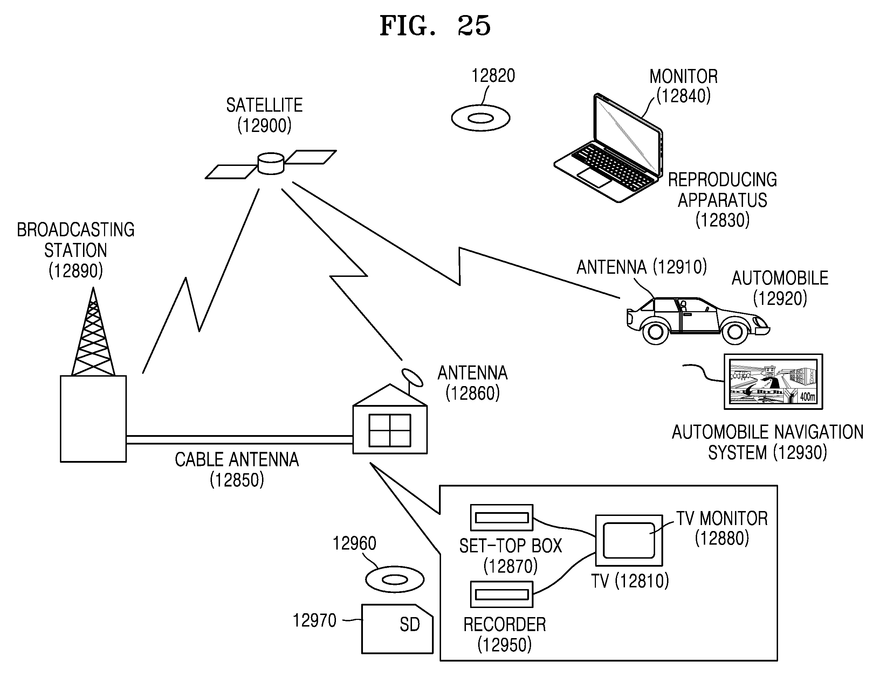

A communication system according to the present disclosure is not limited to the communication system described above with reference to FIG. 24. For example, FIG. 25 illustrates a digital broadcasting system employing a communication system, according to various embodiments. The digital broadcasting system of FIG. 25 according to an embodiment may receive a digital broadcast transmitted via a satellite or a terrestrial network by using the video encoding apparatus and the video decoding apparatus of the present disclosure.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus of the present disclosure is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus of the present disclosure may be installed. Data output from the set-top box 12870 may also be reproduced on a TV monitor 12880.

As another example, the video decoding apparatus of the present disclosure may be installed in the TV receiver 12810 instead of the set-top box 12870.

An automobile 12920 that has an appropriate antenna 12910 may receive a signal transmitted from the satellite 12900 or the wireless base station 11700 of FIG. 23. A decoded video may be reproduced on a display screen of an automobile navigation system 12930 installed in the automobile 12920.

A video signal may be encoded by the video encoding apparatus of the present disclosure and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus of the present disclosure according to an embodiment, a video signal recorded on the DVD disc 12960, the SD card 12970, or another storage medium may be reproduced on the TV monitor 12880.

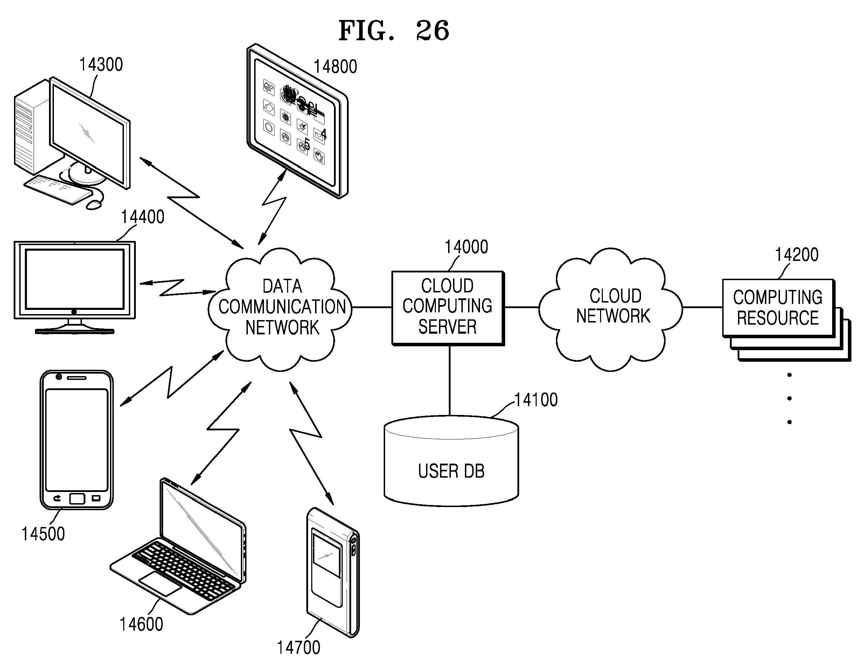

The automobile navigation system 12930 may not include the camera 12530, the camera interface 12630, and the image encoding unit 12720 of FIG. 26. For example, the computer 12100 and the TV receiver 12810 may not be included in the camera 12530, the camera interface 12630, and the image encoding unit 12720 of FIG. 26.

FIG. 26 is a diagram illustrating a network structure of a cloud computing system using a video encoding apparatus and a video decoding apparatus, according to various embodiments.

The cloud computing system of the present disclosure may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus of the present disclosure described above with reference to FIGS. 1A to 20. As another example, the user terminal may include the video encoding apparatus of the present disclosure described above with reference to FIGS. 1A to 19. Alternatively, the user terminal may include both the video decoding apparatus and the video encoding apparatus of the present disclosure described above with reference to FIGS. 1A to 19.

Various applications of the video encoding method, the video decoding method, the video encoding apparatus, and the video decoding apparatus described above with reference to FIGS. 1A to 19 have been described above with reference to FIGS. 20 to 26. However, methods of storing the video encoding method and the video decoding method in a storage medium or methods of implementing the video encoding apparatus and the video decoding apparatus in a device, which have been described above with reference to FIGS. 1A through 19 according to various embodiments, are not limited to the embodiments described above with reference to FIGS. 20 to 26.

While this invention has been particularly shown and described with reference to embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present disclosure.

**Claims**

1. A multi-view video decoding method comprising:

   determining whether a prediction mode of a current block being decoded is a merge mode;
   when the prediction mode is determined to be the merge mode, forming a merge candidate list comprising, as a merge candidate, at least one of an inter-view candidate, a spatial candidate, a disparity candidate, a view synthesis prediction candidate, and a temporal candidate; and
   predicting the current block by selecting a merge candidate to be used in predicting the current block from the merge candidate list,
   wherein whether to include in the merge candidate list a view synthesis prediction candidate for at least one of an adjacent block of the current block and the current block is determined based on whether view synthesis prediction is performed on the adjacent block and the current block.

2. The multi-view video decoding method of claim 1, wherein the view synthesis prediction candidate for the current block has a fixed priority in the merge candidate list.

3. The multi-view video decoding method of claim 1, wherein the view synthesis prediction candidate for the adjacent block is included in the merge candidate list when it is determined that the view synthesis prediction is performed on the adjacent block, and
the view synthesis prediction candidate for the current block is included in the merge candidate list when it is determined that the view synthesis prediction is performed on the current block.

4. The multi-view video decoding method of claim 1, wherein the view synthesis prediction candidate for the adjacent block is included in the merge candidate list when it is determined that the view synthesis prediction is performed on the adjacent block and there is no view synthesis prediction candidate in the merge candidate list, and
the view synthesis prediction candidate for the current block is included in the merge candidate list when it is determined that the view synthesis prediction is performed on the current block and there is no view synthesis prediction candidate in the merge candidate list.

5. The multi-view video decoding method of claim 1, wherein the adjacent block comprises at least a left block of the current block and an upper block of the current block.

6. The multi-view video decoding method of claim 1, wherein the adjacent block only comprises a left block of the current block.

7. The multi-view video decoding method of claim 1, wherein the forming of the merge candidate list comprises:

generating a plurality of groups comprising the inter-view candidate, the spatial candidate, the disparity candidate, the temporal candidate, and the view synthesis prediction candidate;
adding at least one candidate comprised in the plurality of groups to merge candidate groups for each of the plurality of groups; and
adding at least one candidate included in the merge candidates to the merge candidate list based on a priority between the plurality of groups or a priority between candidates in each of the plurality of groups,
wherein the view synthesis prediction candidate for the current block is included in some or all of the plurality of groups.

8. A multi-view video encoding method comprising:

determining whether a prediction mode of a current block being encoded is a merge mode;
when the prediction mode is determined to be the merge mode, forming a merge candidate list comprising, as a merge candidate, at least one of an inter-view candidate, a spatial candidate, a disparity candidate, a view synthesis prediction candidate, and a temporal candidate; and
predicting the current block by selecting a merge candidate to be used in predicting the current block from the merge candidate list,
wherein whether to include in the merge candidate list a view synthesis prediction candidate for at least one of an adjacent block of the current block and the current block is determined based on whether view synthesis prediction is performed on the adjacent block and the current block.

9. The multi-view video encoding method of claim 8, wherein the view synthesis prediction candidate for the current block has a fixed priority in the merge candidate list.

10. The multi-view video encoding method of claim 8, wherein the view synthesis prediction candidate for the adjacent block is included in the merge candidate list when it is determined that the view synthesis prediction is performed on the adjacent block, and
the view synthesis prediction candidate for the current block is included in the merge candidate list when it is determined that the view synthesis prediction is performed on the current block.

11. The multi-view video encoding method of claim 8, wherein the adjacent block only comprises a left block of the current block.

12. The multi-view video encoding method of claim 8, wherein the forming of the merge candidate list comprises:

generating a plurality of groups comprising the inter-view candidate, the spatial candidate, the disparity candidate, the temporal candidate, and the view synthesis prediction candidate;

adding at least one candidate comprised in the plurality of groups to merge candidate groups for each of the plurality of groups; and

adding at least one candidate included in the merge candidates to the merge candidate list based on a priority between the plurality of groups or a priority between candidates in each of the plurality of groups,

wherein the view synthesis prediction candidate for the current block is included in some or all of the plurality of groups.

13. A multi-view video decoding apparatus comprising:

a mode determiner configured to determine whether a prediction mode of a current block being decoded is a merge mode;

a merge candidate list former configured to, when the prediction mode is determined to be the merge mode, form a merge candidate list comprising, as a merge candidate, at least one of an inter-view candidate, a spatial candidate, a disparity candidate, a view synthesis prediction candidate, and a temporal candidate; and

a predictor configured to predict the current block by selecting a merge candidate to be used in predicting the current block from the merge candidate list,

wherein whether to include in the merge candidate list a view synthesis prediction candidate for at least one of an adjacent block of the current block and the current block is determined based on whether view synthesis prediction is performed on the adjacent block and the current block.

14. A multi-view video encoding apparatus comprising:

a mode determiner configured to determine whether a prediction mode of a current block being encoded is a merge mode;

a merge candidate list former configured to, when the mode determiner determines that the prediction mode is the merge mode, form a merge candidate list comprising, as a merge candidate, at least one of an inter-view candidate, a spatial candidate, a disparity candidate, a view synthesis prediction candidate, and a temporal candidate; and

a predictor configured to predict the current block by selecting a merge candidate to be used in predicting the current block from the merge candidate list,

wherein whether to include in the merge candidate list a view synthesis prediction candidate for at least one of an adjacent block of the current block and the current block is determined based on whether view synthesis prediction is performed on the adjacent block and the current block.

15. A computer-readable recording medium having recorded thereon a program for performing the multi-view video decoding method of claim 1.

# FIG. 1A

MODE DETERMINER — 12

MERGE CANDIDATE LIST FORMER — 14

PREDICTOR — 16

— 10

# FIG. 1B

START

DETERMINE WHETHER PREDICTION MODE OF CURRENT BLOCK BEING ENCODED IS MERGE MODE — 11

WHEN PREDICTION MODE IS DETERMINED TO BE MERGE MODE, FORM MERGE CANDIDATE LIST INCLUDING, AS MERGE CANDIDATE, AT LEAST ONE OF SEVERAL CANDIDATES — 13

PREDICT CURRENT BLOCK BY SELECTING CANDIDATE TO BE USED TO PREDICT CURRENT BLOCK FROM MERGE CANDIDATE LIST — 15

END

# FIG. 2A

20

```
┌─────────────────────────────┐
│  ┌───────────────────────┐  │
│  │    MODE DETERMINER     │──┼─ 22
│  └───────────────────────┘  │
│  ┌───────────────────────┐  │
│  │   MERGE CANDIDATE      │──┼─ 24
│  │    LIST FORMER         │  │
│  └───────────────────────┘  │
│  ┌───────────────────────┐  │
│  │      PREDICTOR         │──┼─ 26
│  └───────────────────────┘  │
└─────────────────────────────┘
```

# FIG. 2B

```
              ( START )
                 │
                 ▼
┌──────────────────────────────────┐
│  DETERMINE WHETHER PREDICTION     │
│   MODE OF CURRENT BLOCK BEING     │──── 21
│     DECODED IS MERGE MODE         │
└──────────────────────────────────┘
                 │
                 ▼
┌──────────────────────────────────┐
│ WHEN PREDICTION MODE IS DETERMINED TO │
│ BE MERGE MODE, FORM MERGE CANDIDATE   │──── 23
│ LIST INCLUDING, AS MERGE CANDIDATE,   │
│   AT LEAST ONE OF SEVERAL CANDIDATES  │
└──────────────────────────────────┘
                 │
                 ▼
┌──────────────────────────────────┐
│ PREDICT CURRENT BLOCK BY SELECTING │
│ CANDIDATE TO BE USED TO PREDICT     │──── 25
│  CURRENT BLOCK FROM MERGE           │
│     CANDIDATE LIST                  │
└──────────────────────────────────┘
                 │
                 ▼
              ( END )
```

# FIG. 3A

# FIG. 3B

# FIG. 4A

REFERENCE SCREEN OF
REFERENCE VIEW

REFERENCE SCREEN OF
CURRENT VIEW

MOTION VECTOR
OF REFERENCE
BLOCK AT
REFERENCE
SAMPLE LOCATION

INDUCED MOTION
VECTOR OF
CURRENT BLOCK

SAMPLE LOCATION X
OF REFERENCE VIEW

DISPARITY VECTOR:
(ASSIGNED BY
MAXIMUM DEPTH
VALUE D)

REFERENCE
SAMPLE
LOCATION $X_R$

CURRENT BLOCK

LOCATION X

REFERENCE SCREEN OF
REFERENCE VIEW

REFERENCE SCREEN OF
CURRENT VIEW

MAXIMUM DEPTH
VALUE D OF RELATED
DEPTH BLOCK

ESTIMATE DEPTH MAP OF CURRENT
SCREEN OF CURRENT VIEW

# FIG. 4B

# FIG. 4C

EP 2 988 509 A1

# FIG. 4D

BITSTREAM ⟶ ENTROPY DECODING ⟶ INVERSE QUANTIZATION ⟶ INVERSE DCT ⟶ (+,+) ⟶ DEBLOCKING ⟶

BLOCK PREDICTION ← FRAME BUFFER ← DEBLOCKING

BITSTREAM ⟶ ENTROPY DECODING ⟶ INVERSE QUANTIZATION ⟶ INVERSE DCT ⟶ (+,+) ⟶ DEBLOCKING ⟶

VIEW SYNTHESIS COLOR IMAGE

SYNTHESIS FRAME

VIEW SYNTHESIS DEPTH IMAGE

SYNTHESIS FRAME

BLOCK PREDICTION ← FRAME BUFFER ← DEBLOCKING

# FIG. 4E

REFERENCE DEPTH
SCREEN

DEPTH BLOCK
USED IN VSP

DISPARITY VECTOR
COPIED FROM
ADJACENT BLOCK
(S42)

CURRENT BLOCK

DISPARITY VECTOR OF
ADJACENT BLOCK
(S41)

BACKWARD
WARPING
(S43)

REFERENCE TEXTURE
SCREEN

CURRENT TEXTURE
SCREEN

# FIG. 5A

(a) 1st Grouping

A
1. Inter-view candidate (1)
2. Spatial candidates (5)
3. Disparity candidate (1)
4. VSP candidate (1)

→ Select 5 Candidates

B
1. Temporal candidates (2)

→ Select 1 Candidate

→ Select 6 Candidates

(b) 2nd Grouping

A
1. Inter-view candidate (1)
2. Spatial candidates (5)
3. Disparity candidate (1)

→ Select 5 Candidates

B
1. Temporal candidates (2)
2. VSP candidate (1)

→ Select 1 Candidate

→ Select 6 Candidates

(c) 3rd Grouping

A
1. Inter-view candidate (1)
2. Spatial candidates (5)
3. Disparity candidate (1)

→ Select 5 Candidates

B
1. Temporal candidates (2)

→ Select 1 Candidate

C
1. VSP candidate (1)

→ Select 1 Candidate

→ Select 6 Candidates

# FIG. 5B

A

1. Add inter-view candidate
2. Add left candidate
       · But if VSP coded and VSP mode is not added, add VSP candidate
3. Add above candidate
       · But if VSP coded and VSP mode is not added, add VSP candidate
4. Add above-right candidate
       · But if VSP coded and VSP mode is not added, add VSP candidate
5. Add disparity candidate
6. Add below-left candidate
       · But if VSP coded and VSP mode is not added, add VSP candidate
7. Add above-left candidate
       · But if VSP coded and VSP mode is not added, add VSP candidate
8. Add VSP candidate if not added before

- - - - - - - - - - - - - - - - - - - - - - - - - - - - - - - - - - - - -

B

1. Add bottom-right or center temporal candidate

# FIG. 5C

A

1. Add inter-view candidate
2. Add left candidate
3. Add above candidate
4. Add above-right candidate
5. Add disparity candidate
6. Add VSP candidate
7. Add below-left candidate
8. Add above-left candidate

---

B

1. Add bottom-right or center temporal candidate

# FIG. 5D

A

1. Add inter-view candidate
2. Add left candidate
3. Add above candidate
4. Add above-right candidate
5. Add disparity candidate
6. Add below-left candidate
7. Add above-left candidate

---

B

1. Add bottom-right or center temporal candidate
2. Add VSP candidate

# FIG. 5E

A

1. Add inter-view candidate
2. Add left candidate
3. Add above candidate
4. Add above-right candidate
5. Add disparity candidate
6. Add below-left candidate
7. Add above-left candidate

- - - - - - - - - - - - - - - - - - - - - - - - - - - - - - - - - - - - -

B

1. Add bottom-right or center temporal candidate

- - - - - - - - - - - - - - - - - - - - - - - - - - - - - - - - - - - - -

C

1. Add VSP candidate

# FIG. 5F

A

1. Add inter-view candidate
2. Add left candidate
   · But if VSP coded and VSP mode is not added, add VSP candidate
3. Add above candidate
   · But if VSP coded and VSP mode is not added, add VSP candidate
4. Add above-right candidate
5. Add disparity candidate
6. Add VSP candidate if not added before
7. Add below-left candidate
8. Add above-left candidate

- - - - - - - - - - - - - - - - - - - - - - - - - - - - - - - - - - - - -

B

1. Add bottom-right or center temporal candidate

# FIG. 5G

A

1. Add inter-view candidate
2. Add left candidate
    · But if VSP coded and VSP mode is not added, add VSP candidate
3. Add above candidate
    · But if VSP coded and VSP mode is not added, add VSP candidate
4. Add above-right candidate
5. Add disparity candidate
6. Add below-left candidate
7. Add above-left candidate

- - - - - - - - - - - - - - - - - - - - - - - - - - - - - - - - - - - -

B

1. Add bottom-right or center temporal candidate
2. Add VSP candidate if not added before


# FIG. 5H

A

1. Add inter-view candidate
2. Add left candidate
    · But if VSP coded and VSP mode is not added, add VSP candidate
3. Add above candidate
    · But if VSP coded and VSP mode is not added, add VSP candidate
4. Add above-right candidate
5. Add disparity candidate
6. Add below-left candidate
7. Add above-left candidate

- - - - - - - - - - - - - - - - - - - - - - - - - - - - - - - - - - - -

B

1. Add bottom-right or center temporal candidate

- - - - - - - - - - - - - - - - - - - - - - - - - - - - - - - - - - - -

C

1. Add VSP candidate if not added before

# FIG. 5I

A

1. Add inter-view candidate
2. Add left candidate
   · But if VSP coded, add VSP candidate
3. Add above candidate
   · But if VSP coded, add VSP candidate
4. Add above-right candidate
5. Add disparity candidate
6. Add VSP candidate
7. Add below-left candidate
8. Add above-left candidate

---

B

1. Add bottom-right or center temporal candidate

# FIG. 5J

A

1. Add inter-view candidate
2. Add left candidate
   · But if VSP coded, add VSP candidate
3. Add above candidate
   · But if VSP coded, add VSP candidate
4. Add above-right candidate
5. Add disparity candidate
6. Add below-left candidate
7. Add above-left candidate

---

B

1. Add bottom-right or center temporal candidate
2. Add VSP candidate

# FIG. 5K

A

1. Add inter-view candidate
2. Add left candidate
    · But if VSP coded, add VSP candidate
3. Add above candidate
    · But if VSP coded, add VSP candidate
4. Add above-right candidate
5. Add disparity candidate
6. Add below-left candidate
7. Add above-left candidate

- - - - - - - - - - - - - - - - - - - - - - - - - - - - - - - - - - - - - - - - - -

B

1. Add bottom-right or center temporal candidate

- - - - - - - - - - - - - - - - - - - - - - - - - - - - - - - - - - - - - - - - - -

C

2. Add VSP candidate

# FIG. 6A

```
    ⎧ ...
    ⎪ if( availableFlagVSP && !ic_flag && iv_res_pred_weight_idx = = 0 &&
61 ⎨                                              i<(5+NumExtraMergeCand) )
    ⎪     extMergeCandList[i++] = VSP
    ⎩ ...
```

# FIG. 6B

```
if( availableFlagVSP && !ic_flag &&
iv_res_pred_weight_idx = = 0){
                j = 4;
                while ( j < MaxNumMergeCand ){
                        extMergeCandList[j] = extMergeCandList[j-1]

                        j++
                }
                extMergeCandList[3] = VSP
        }
```

62

# FIG. 7

```
        110              120              130
┌─────────────────┐ ┌─────────────┐ ┌──────────┐
│ MAXIMUM CODING  │→│ CODING UNIT │→│  OUTPUT  │→
│  UNIT SPLITTER  │ │ DETERMINER  │ │   UNIT   │
└─────────────────┘ └─────────────┘ └──────────┘
```
100

# FIG. 8

```
      210          220              230
┌──────────┐ ┌─────────────┐ ┌──────────────┐
│          │ │ IMAGE DATA  │ │              │
│          │ │ AND ENCODING│ │  IMAGE DATA  │
│ RECEIVER │→│ INFORMATION │→│   DECODER    │→
│          │ │  EXTRACTOR  │ │              │
└──────────┘ └─────────────┘ └──────────────┘
```
200

## FIG. 9

RESOLUTION : 1920×1080
MAXIMUM SIZE OF CODING UNIT : 64
MAXIMUM DEPTH = 2

| 64 | 64 | 32 | 32 |
|---|---|---|---|
| 64×64 | 64×32 | 32×64 | 32×32 |

— 310

| 32 | 32 | 16 | 16 |
|---|---|---|---|
| 32×32 | 32×16 | 16×32 | 16×16 |

RESOLUTION : 1920×1080
MAXIMUM SIZE OF CODING UNIT : 64
MAXIMUM DEPTH = 3

— 320

| 16 | 16 | 8 | 8 |
|---|---|---|---|
| 16×16 | 16×8 | 8×16 | 8×8 |

RESOLUTION : 352×288
MAXIMUM SIZE OF CODING UNIT : 16
MAXIMUM DEPTH = 1

| 8 | 8 | 4 | 4 |
|---|---|---|---|
| 8×8 | 8×4 | 4×8 | 4×4 |

— 330

315    335  325

# FIG. 10

EP 2 988 509 A1

# FIG. 11

EP 2 988 509 A1

# FIG. 12

MAXIMUM CODING UNIT

MAXIMUM HEIGHT AND MAXIMUM WIDTH OF CODING UNIT = 64

MAXIMUM DEPTH = 3

600

PREDICTION UNIT / PARTITION

| 64 ⟋610 | 64 ⟋612 | 32 ⟋614 | 32 ⟋616 |
|---|---|---|---|
| 64×64 | 64×32 | 32×64 | 32×32 |
| 32 ⟋620 | 32 ⟋622 | 16 ⟋624 | 16 ⟋626 |
| 32×32 | 32×16 | 16×32 | 16×16 |
| 16 ⟋630 | 16 ⟋632 | 8 ⟋634 | 8 ⟋636 |
| 16×16 | 16×8 | 8×16 | 8×8 |
| 8 ⟋640 | 8 ⟋642 | 4 ⟋644 | 4 ⟋646 |
| 8×8 | 8×4 | 4×8 | 4×4 |

MINIMUM CODING UNIT

DEEPER CODING UNIT

# FIG. 13

CODING UNIT
(710)

64

64×64

TRANSFORMATION UNIT
(720)

32

32

32×32

# FIG. 14

PARTITION TYPE (800)

PREDICTION MODE (810)

SIZE OF TRANSFORMATION UNIT (820)

# FIG. 15

# FIG. 16

CODING UNIT (1010)

# FIG. 17

1014 — 1016

1022

1032

1048

1054

1050 1052 PREDICTION UNIT (1060)

# FIG. 18

1014

1016

1022

1032

1048

1054

TRANSFORMATION UNIT (1070)

1050

1052

## FIG. 19

CU 1300

| 1302 | 1312 | 1314 |
| | 1316 | 1318 |
| 1304 | 1306 | |

PU

1322 2Nx2N  1324 2NxN  1326 Nx2N  1328 NxN  1332 2NxnU  1334 2NxnD  1336 nLx2N  1338 nRx2N

TU

TU size flag=0 — 1342

TU size flag=1 — 1344

TU

TU size flag=0 — 1352

TU size flag=1 — 1354

EP 2 988 509 A1

# FIG. 20

Se

Tr

DISC (26000)

# FIG. 21

26700

26800

26000

# FIG. 22

STREAMING SERVER
(11300)

CAMERA (12600)

COMPUTER (12100)

(11700)

INTERNET
(11100)

COMMUNICATION
NETWORK
(11400)

(11800)

PDA (12200)

(11900)

VIDEO CAMERA
(12300)

(12000)

INTERNET SERVICE
PROVIDER (11200)

11000

VIDEO CAMERA
(12500)

EP 2 988 509 A1

# FIG. 23

12500

12530    12580    12510

12520

12560

12540

12550

12540

12570

# FIG. 24

| | |
|---|---|
| DISPLAY SCREEN (12520) | LCD CONTROLLER (12620) |
| | IMAGE DECODER (12690) |
| | MULTIPLEXER / DEMULTIPLEXER (12680) |
| STORAGE MEDIUM (12570) | RECORDER / READER (12670) |
| COMMUNICATION CIRCUIT (12610) | MODULATOR / DEMODULATOR (12660) |
| MICROPHONE (12550) | SOUND PROCESSOR (12650) |
| SPEAKER (12580) | |

SYNCHRONIZATION BUS (12730)

POWER SUPPLY CIRCUIT (12700)

CENTRAL CONTROLLER (12710)

OPERATION INPUT CONTROLLER (12640) — OPERATION PANEL (12540)

IMAGE ENCODER (12720)

CAMERA INTERFACE (12630) — CAMERA (12530)

12510

12500

EP 2 988 509 A1

# FIG. 25

SATELLITE
(12900)

12820

MONITOR
(12840)

REPRODUCING
APPARATUS
(12830)

BROADCASTING
STATION
(12890)

ANTENNA (12910)

AUTOMOBILE
(12920)

ANTENNA
(12860)

AUTOMOBILE NAVIGATION
SYSTEM (12930)

CABLE ANTENNA
(12850)

12960

SET-TOP BOX
(12870)

TV MONITOR
(12880)

TV (12810)

12970

SD

RECORDER
(12950)

EP 2 988 509 A1

## FIG. 26

14300

14800

14400

14000

CLOUD
COMPUTING
SERVER

14200

COMPUTING
RESOURCE

DATA
COMMUNICATION
NETWORK

CLOUD
NETWORK

14100

USER DB

14500

14600

14700

EP 2 988 509 A1

## INTERNATIONAL SEARCH REPORT

International application No.

**PCT/KR2014/003372**

| A. | CLASSIFICATION OF SUBJECT MATTER |
|---|---|

*H04N 19/597(2014.01)i*

According to International Patent Classification (IPC) or to both national classification and IPC

| B. | FIELDS SEARCHED |
|---|---|

Minimum documentation searched (classification system followed by classification symbols)
H04N 19/597; H04N 13/00; H04N 5/225; H04N 19/51; H04N 7/32; H04N 19/105; H04N 5/228

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi-view, merge mode, view synthesis prediction

| C. | DOCUMENTS CONSIDERED TO BE RELEVANT | |
|---|---|---|
| Category* | Citation of document, with indication, where appropriate, of the relevant passages | Relevant to claim No. |
| Y<br><br>A | KR 10-2013-0028633 A (KT CORPORATION) 19 March 2013<br>See abstract, paragraphs [0083]-[0090], [0134]-[0138] and figure 13. | 1,3-6,8,10-11<br>,13-15<br>2,7,9,12 |
| Y<br><br>A | US 2012-0314027 A1 (TIAN, Dong et al.) 13 December 2012<br>See abstract, paragraphs [0058], [0240]-[0247], claim 1 and figures 4, 28. | 1,3-6,8,10-11<br>,13-15<br>2,7,9,12 |
| A | KR 10-2012-0080122 A (SAMSUNG ELECTRONICS CO., LTD. et al.) 16 July 2012<br>See paragraphs [0051]-[0052], [0094], [0104]-[0110], claim 12 and figure 6. | 1-15 |
| A | US 2007-0030356 A1 (YEA, Se Hoon et al.) 08 February 2007<br>See paragraphs [0059], [0067]-[0078], [0123]-[0125], claim 1 and figures 4, 13. | 1-15 |
| A | WO 2012-171442 A1 (MEDIATEK INC.) 20 December 2012<br>See paragraphs [0010]-[0013], [0026]-[0028], [0042]-[0043], claims 1, 36 and figure 5. | 1-15 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 JULY 2014 (28.07.2014) | **29 JULY 2014 (29.07.2014)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

International application No.

**PCT/KR2014/003372**

| Patent document cited in search report | Publication date | Patent family member | Publication date |
|---|---|---|---|
| KR 10-2013-0028633 A | 19/03/2013 | KR 10-1348566 B1 | 10/01/2014 |
| | | KR 10-2013-0139809 A | 23/12/2013 |
| | | KR 10-2013-0139810 A | 23/12/2013 |
| | | KR 10-2013-0139811 A | 23/12/2013 |
| | | KR 10-2014-0049527 A | 25/04/2014 |
| | | KR 10-2014-0049528 A | 25/04/2014 |
| | | KR 10-2014-0053050 A | 07/05/2014 |
| | | KR 10-2014-0053051 A | 07/05/2014 |
| | | KR 10-2014-0053052 A | 07/05/2014 |
| US 2012-0314027 A1 | 13/12/2012 | WO 2014-010537 A1 | 16/01/2014 |
| KR 10-2012-0080122 A | 16/07/2012 | US 2014-0002599 A1 | 02/01/2014 |
| | | WO 2012-093879 A2 | 12/07/2012 |
| | | WO 2012-093879 A3 | 29/11/2012 |
| US 2007-0030356 A1 | 08/02/2007 | CN 100562130 C | 18/11/2009 |
| | | EP 1793609 A2 | 06/06/2007 |
| | | EP 1793609 A3 | 13/05/2009 |
| | | EP 1793610 A1 | 06/06/2007 |
| | | EP 1793611 A2 | 06/06/2007 |
| | | EP 1793611 A3 | 25/03/2009 |
| | | EP 1825690 A1 | 29/08/2007 |
| | | EP 1978750 A2 | 08/10/2008 |
| | | EP 1978750 A3 | 24/02/2010 |
| | | JP 2007-159111 A | 21/06/2007 |
| | | JP 2007-159112 A | 21/06/2007 |
| | | JP 2007-159113 A | 21/06/2007 |
| | | JP 2007-259433 A | 04/10/2007 |
| | | JP 2008-022549 A | 31/01/2008 |
| | | JP 2008-172749 A | 24/07/2008 |
| | | JP 2008-524873 A | 10/07/2008 |
| | | JP 2011-155683 A | 11/08/2011 |
| | | JP 2012-016044 A | 19/01/2012 |
| | | JP 2012-016045 A | 19/01/2012 |
| | | JP 2012-016046 A | 19/01/2012 |
| | | JP 2012-114942 A | 14/06/2012 |
| | | JP 4762936 B2 | 31/08/2011 |
| | | JP 4786534 B2 | 05/10/2011 |
| | | JP 4890201 B2 | 07/03/2012 |
| | | JP 4995330 B2 | 08/08/2012 |
| | | JP 5013993 B2 | 29/08/2012 |
| | | JP 5106830 B2 | 26/12/2012 |
| | | JP 5116394 B2 | 09/01/2013 |
| | | JP 5154679 B2 | 27/02/2013 |
| | | JP 5154680 B2 | 27/02/2013 |
| | | JP 5154681 B2 | 27/02/2013 |
| | | JP 5274766 B2 | 28/08/2013 |
| | | US 2006-0132610 A1 | 22/06/2006 |

Form PCT/ISA/210 (patent family annex) (July 2009)

## INTERNATIONAL SEARCH REPORT
Information on patent family members

International application No.

**PCT/KR2014/003372**

| Patent document cited in search report | Publication date | Patent family member | Publication date |
|---|---|---|---|
| | | US 2006-0146138 A1 | 06/07/2006 |
| | | US 2006-0146141 A1 | 06/07/2006 |
| | | US 2006-0146143 A1 | 06/07/2006 |
| | | US 2007-0109409 A1 | 17/05/2007 |
| | | US 2007-0121722 A1 | 31/05/2007 |
| | | US 2010-0322311 A1 | 23/12/2010 |
| | | US 7468745 B2 | 23/12/2008 |
| | | US 7489342 B2 | 10/02/2009 |
| | | US 7671894 B2 | 02/03/2010 |
| | | US 7710462 B2 | 04/05/2010 |
| | | US 7728877 B2 | 01/06/2010 |
| | | US 7728878 B2 | 01/06/2010 |
| | | US 7903737 B2 | 08/03/2011 |
| | | US 8451895 B2 | 28/05/2013 |
| | | WO 2006-064710 A1 | 22/06/2006 |
| WO 2012-171442 A1 | 20/12/2012 | AU 2012-269583 A1 | 17/10/2013 |
| | | CN 103597837 A | 19/02/2014 |
| | | EP 2721825 A1 | 23/04/2014 |
| | | KR 10-2014-0011481 A | 28/01/2014 |
| | | US 2014-0078254 A1 | 20/03/2014 |

Form PCT/ISA/210 (patent family annex) (July 2009)